# EUROPÄISCHE PATENTSCHRIFT

(11) **EP 1 133 197 B1**
(45) Veröffentlichungstag und Bekanntmachung des Hinweises auf die Patenterteilung: **17.07.2013**
(21) Anmeldenummer: 01100671.5
(22) Anmeldetag: 11.01.2001
(51) Int. Cl.: H04Q 3/545, H04M 3/24

(54) **Vermittlungseinrichtung**
Switching device
Dispositif de commutation

(30) Priorität: 08.03.2000 DE 10011268
(43) Veröffentlichungstag der Anmeldung: 12.09.2001
(73) Patentinhaber: Tenovis GmbH & Co. KG, 60362 Frankfurt am Main (DE)
(72) Erfinder: Maier, Klaus, 61231 Bad Nauheim (DE); Eli, Bernhard, 65428 Rüsselsheim (DE); Zodel, Wolfgang, 60316 Frankfurt (DE); Joch, Michael, 63303 Dreieich (DE); Dardat, Wolfgang, 34593 Knüllwald (DE); Hirt, Manfred, 65527 Niedernhausen (DE)
(74) Vertreter: Tergau & Walkenhorst

(56) Entgegenhaltungen:
- WO-A-98/13961
- US-A- 5 251 299
- WILLETT R. J. : "DESIGN OF RECOVERY STRAZEGIES FOR A FAULT-TOLERANT N°. 4 ELECTRONIC SWITCHING SYSTEM" BELL SYSTEM TECHNICAL JOURNAL, Bd. 61, Nr. 10, 1. Dezember 1982 (1982-12-01), Seiten 3019-3040, XP000845239 MURRAY HILL, NEW JERSEY, USA

## Beschreibung

### Stand der Technik

Die Erfindung geht aus von einer Vermittlungseinrichtung bestehend aus mehreren gleichartig aufgebauten Kommunikationsmodulen sowie mindestens einem übergeordneten Kommunikationsmodul.

Aus der Broschüre ISDN-Telekommunikationssystem Integral 33x Systeminformation, 1993, Telenorma Bosch Telecom, insbesondere Seiten 42 bis 47, ist es bekannt eine Vermittlungseinrichtung modular aufzubauen mit modularen Koppelfeldbaugruppen für periphere Einheiten und einem zentralen Koppelfeld. Zwischen dem zentralen Koppelfeld und den Koppelfeldmodulen sind entsprechende Kommunikationsverbindungen über PCM-Sammelschienen vorgesehen. Die Steuerung der Koppelfeldmodule erfolgt über Gruppensteuerungen und die Steuerung des zentralen Koppelfeldes über eine Zentralsteuerung.

Aus der DE 19737359 C2 ist eine Kommunikationseinrichtung bekannt mit einer zentralen Koppelanordung (Schaltmatrix) und Leitungsbaugruppen, über die Übertragungsleitungen an die Koppelanordnung schaltbar sind. Für eine Anzahl von N Leitungsbaugruppen steht eine zusätzliche Ersatz-Leitungsbaugruppe zur Verfügung. Über Selektions- und Schaltmittel erfolgt die Auswahl der Schaltwege.

Weitere Vermittlungsanlagen oder Multiprozessorsysteme, welche aus mehreren gleichartigen Kommunikationsmodulen aufgebaut sind, sind den Druckschriften WO 98/13961 A2 und US 5 251 299 zu entnehmen.

### Vorteile der Erfindung

Mit den Maßnahmen des Anspruchs 1 ist es möglich innerhalb einer Vermittlungsanlage den Betrieb weiter aufrecht zu erhalten, wenn ein übergeordnetes Kommunikationsmodul ausfällt oder einen Fehler aufweist.

Die zum Zeitpunkt des Auftretens eines Fehlers existierenden Verbindungen (Gespräche, Daten) gehen dabei nicht verloren. Auch die übergeordneten Steuerfunktionen bleiben erhalten. Bei einer Umschaltung der Vermittlungs- und Steuerfunktionen auf das redundante Partnermodul kann das defekte übergeordnete Kommunikationsmodul ohne Systemstörung entfernt bzw. ausgetauscht werden.

Desweiteren wird eine höhere Verfügbarkeit erzielt, da bei einem Fehler nur ein Teil der Verbindungen, z. B. 25% der modulübergreifenden Verbindungen bei vier Teilmodulen, ausfällt, während die anderen Verbindungen erhalten bleiben.

Mit der Ausgestaltung nach Anspruch 2 kann auch ein Kommunikationsmodul ohne übergeordnete Aufgaben ausfallen oder fehlerhaft sein, ohne dass Beeinträchtigungen auftreten. Existierende Verbindungen des betroffenen Kommunikationsmoduls gehen nicht verloren.

Durch die Maßnahmen des Anspruchs 3 können Ersatzwege über modulübergreifende Verbindungen geschaltet werden, was die Ausfallwahrscheinlichkeit der Vermittlungseinrichtung weiter vermindert.

Durch eine modulübergreifende Verbindung zwischen zwei separaten Schnittstellen der übergeordneten Kommunikationsmodule gemäß Anspruch 4 ist ebenfalls eine Ersatzwegschaltung möglich, die den Weiterbetrieb der Vermittlungseinrichtung auch bei Ausfall mehrerer Kommunikationsmodule zulässt.

Bei der Ausgestaltung nach Anspruch 5 können defekte Kommunikationsteilmodule, defekte übergeordnete Kommunikationsmodule und auch modulübergreifende Verbindungsstrecken ohne Systemstörung entfernt bzw. ausgetauscht werden. Da die Redundanz nur partiell ausgenutzt wird, reduzieren sich Störungen während der Umschaltung nur auf das defekte Kommunikationsmodul.

Die Maßnahmen nach den Ansprüchen 6 und 7 zeigen auf wie die Vermittlungseinrichtung trotz Auftretens von Mehrfachfehlern oder -ausfällen immer noch zuverlässig arbeiten kann.

Die Ausgestaltung nach Anspruch 8 ermöglicht, dass bestehende Verbindungen weiter aufrecht erhalten werden, was insbesondere vorteilhaft ist für Standleitungsverbindungen.

Die Ausgestaltung nach Anspruch 9 hat den Vorteil, dass eine Umschaltemeldung von einem bisher passiv geschalteten Kommunikationsmodul sofort als Umschaltkriterium zum Übergang in den aktiven Betrieb verwendet werden kann.

Die Maßnahmen nach Anspruch 10 haben den Vorteil, dass steuerbare Bustreiber als Umschalteinrichtungen durch einen Steuerbefehl gleichzeitig aktiviert werden können und so ein Datentausch zwischen entsprechenden Baugruppen unterschiedlicher Kommunikationsmodule sofort möglich ist.

Mit der Ausgestaltung nach Anspruch 11 wird im Fehlerfall eine Signalisierung generiert zur Steuerung einer Anzeigeeinrichtung oder einer Zentrale ein defektes Kommunikationsmodul zu melden. Darauf kann vom Servicepersonal dieses defekte Kommunikationsmodul während des Systembetriebs störungsfrei repariert werden.

Mit der Information über den Fehlertyp nach Anspruch 12 kann die Art der Umschaltung auf einfache Weise dokumentiert werden, beispielsweise ob wie in den Ansprüchen 13 oder 14 ausgeführt eine eine hard- oder softwaremässige Umschaltung bei einer erforderlichen schnellen Reaktion erfolgt ist oder nicht.

Gemäß Anspruch 15 werden auch die Partnermodule auf Fehler oder Ausfall hin überwacht, denn wenn dieses auszufallen droht, muss vom Servicepersonal sofort reagiert werden können, da sonst im Fehlerfall auf der aktiven Seite eventuell die Vermittlungsfunktionen auf der passiven Seite entweder gar nicht mehr oder nur noch eingeschränkt ausführbar sind (Redundanzverlust).

Die Maßnahmen des Anspruchs 16 gestatten einen einfachen Service oder Wartung. Das jeweils passiv geschaltete Kommunikationsteilmodul kann entfernt werden, z. B. für einen Softwaretausch der Modul-Steuerung oder Download für Schaltmatrix-, Töne- und/oder Sprachansagen-Software.

Mit der Ausgestaltung nach Anspruch 17 kann eine zuverlässige und einfache Taktsynchronisierung in der Vermittlungseinrichtung erzielt werden.

Die Maßnahmen der Ansprüche 18 bis 23 zeigen vorteilhafte Ausgestaltungen der gegenseitigen Überwachung auf sowie des geordneten Ablaufs der Zusammenarbeit der einzelnen Kommunikationsmodule.

### Zeichnungen

Anhand der Zeichnungen werden Ausführungsbeispiele der Erfindung näher erläutert. Es zeigen
Fig. 1 eine Vermittlungseinrichtung nach der Erfindung,
Fig. 2 eine Vermittlungseinrichtung nach einer Umschaltung,
Fig. 3 eine Vermittlungseinrichtung mit teilweise nichtredundanten Kommunikationsmodulen,
Fig. 4 bis Fig. 7 Vermittlungseinrichtungen mit Ersatzwegschaltung bzw. Umschaltung bei Auftreten von Mehrfachfehlern,
Fig. 8 das Prinzip des Abgleichs der Steuereinrichtungen für die Schaltmatrizen.

### Beschreibung von Ausführungsbeispielen

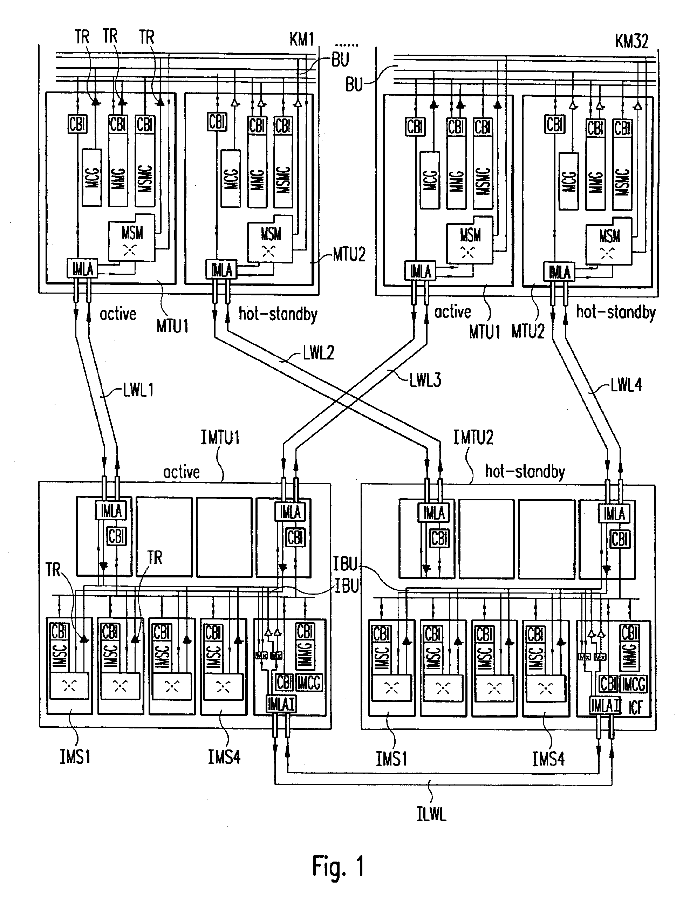

In Fig. 1 ist eine Vermittlungseinrichtung nach der Erfindung dargestellt. Diese Vermittlungseinrichtung besteht aus gleichartigen Kommunikationsmodulen KM1, KM2, ... KMn, wobei n eine fortlaufende Nummer, z. B. 32 angibt. Die Kommunikationsmodule KM1, KM2, ... KMn weisen jeweils zwei zueinander redundante Kommunikationsteilmodule MTU1 und MTU2 auf. Ausserdem ist ein übergeordnetes Kommunikationsmodul IMTU1 vorgesehen, welchem ein redundantes Partnermodul IMTU2 zugeordnet ist. Sowohl die Kommunikationsmodule, wie auch das übergeordnete Kommunikationsmodul IMTU1 und sein Partnermodul IMTU2 weisen folgende Funktionseinheiten auf (den Funktionseinheiten der übergeordneten Kommunikationsmodule ist zur Unterscheidung gegenüber den untergeordneten Kommunikationsmodulen jeweils ein I vorangestellt):
- eine Taktaufbereitung MCG bzw. IMCG (module clock generation),
- eine Schaltmatrix MSM bzw. IMSM (module switching matrix), d.h. ein Koppelfeld,
- eine Steuereinrichtung MSMC bzw. IMSMC (module switching matrix control) für die Schaltmatrix,
- eine Modul-Steuerung MMG bzw. IMMG (module manager),
- Schnittstellen CBI zu einem Bus BU bezüglich der untergeordneten Kommunikationsmodule KM1, KM2 .... bzw. zu einem kommunikationsmodulinternen Bus IBU bezüglich der übergeordneten Kommunikationsmodule IMTU1 und IMTU2,
- Schnittstellen IMLA für modulübergreifende bidirektionale Verbindungen LWL1, LWL2, LWL3, LWL4 zwischen den Kommunikationsmodulen KM1, KM2, ... und einem übergeordneten Kommunikationsmodul IMTU1 bzw. IMTU2 einerseits und zwischen übergeordneten Kommunikationsmodulen IMTU1 und IMTU2 andererseits. Letztere separate Schnittstellen für die direkte Verbindung der übergeordneten Kommunikationsmodule IMTU1 und IMTU2 untereinander sind mit IMLAI bezeichnet.

Die modulübergreifende bidirektionale Verbindung zwischen den im Ausführungsbeispiel gemäss Fig. 1 gezeigten zwei übergeordneten Kommunikationsmodulen IMTU1 und IMTU2 ist mit ILWL bezeichnet. Über diese modulübergreifende Verbindung ILWL sind die Funktionen des Kommunikationsmoduls IMTU1 bei Fehler oder Ausfall auf sein redundantes Partnermodul IMTU2 umschaltbar.

In einer Ausgestaltung der Erfindung besitzen auch die Kommunikationsmodule KM1, KM2, ... jeweils ein Teilmodul MTU1 und ein dazu redundantes Teilmodule MTU2. Auf dieses redundante Teilmodul MTU2 kann bei Fehler oder Ausfall eines entsprechenden Teilmoduls MTU1 in den Kommunikationsmodulen KM1, KM2, ... umgeschaltet werden. Im fehlerfreien Betrieb sind, jeweils die Teilmodule MTU1 in den Kommunikationsmodulen KM1, KM2, ... und das übergeordnete Kommunikationsmodul IMTU1 aktiv geschaltet. Dazu ist pro Anzahl der vorgesehenen Kommunikationsmodule KM1, KM2, ... jeweils eine Schnittstelle IMLA pro Teilmodul mit einer entsprechenden Schnittstelle IMLA auf dem übergeordneten Kommunikationsmodul IMTU1 über jeweils eine bidirektionale modulübergreifende Verbindung, im Ausführungsbeispiel die Verbindungen LWL1 und LWL3, verbunden.

Bei den übergeordneten Kommunikationsmodulen IMTU1 und IMTU2 ist die Schaltmatrix IMSM und die zugehörige Steuereinrichtung IMSMC zwecks Erhöhung der Ausfallsicherheit auf mehreren gleichartig aufgebauten Teilmodulen, im dargestellten Beispiel vier, IMS1, ... IMS4 untergebracht. Die Teilmodule IMS1, ... IMS4 sind über den kommunikationsmodulinternen Bus IBU sowohl untereinander als auch mit den übrigen Baugruppen des übergeordneten Kommunikationsmoduls verbunden. Die Teilmodule IMS1, ... IMS4 sind inbesondere so eingerichtet, dass sie unabhängig von anderen Steuereinrichtungen arbeiten können. Die Schaltmatrix ist dabei so organisiert, dass jeweils alle 128 vom übergeordneten Kommunikationsmodul ausgehenden modulübergreifenden Datenpfade (32 Module x 4 Intermodul-Datenpfade in Senderichtung), die maximal von den angeschlossenen Kommunikationsmodulen in Senderichtung kommen, parallel an jedes der vier Teilmodule gelangen. Empfangsseitig erhält jedes angeschlossene Kommunikationsmodul jeweils nur einen seiner insgesamt vier modulübergreifenden Datenpfade von je einem der Teilmodule. Jedem der Teilmodule ist jeweils ein eigene Steuereinrichtung IMSC zugeordnet, die auch in der Lage ist unabhängig von den anderen Steuereinrichtungen, insbesodere bei deren Ausfall, zu arbeiten. Die HW-nahe Software für die Steuereinrichtungen IMSC ist auf allen vier Steuereinrichtungen gleich. Diese vier Anteile stellen in ihrer Gesamtheit die Steuereinrichtung IMSMC der Schaltmatrix IMSM dar. Über eine Kennung im Schienendruck (CBI Adresse des Steckplatzes) erkennt die IMSC Software welche Datenpfad-Nummer in Empfangsrichtung von diesem Teilmodul bedient werden muss. Die Meldungen zum Einstellen der Schaltmatrix werden von der Vermittlungssoftware an eine logische IMSC-CBI-Adresse gesendet. Dadurch werden diese meldungen von allen vier IMSC-Steuereinrichtungen parallel empfangen. Jede IMSC muss anhand des in der Meldung empfangenen "Receive Inter Module" Zeitschlitzes ermitteln, ob dieser Zeitschlitz zu dem Steckplatz dieser Baugruppe (Funktionseinheit) gehört. Bei Übereinstimmung erfolgt die Bearbeitung der Meldung, wenn der Zeitschlitz jedoch ausserhalb des Bearbeitungsbereiches liegt, wird die Meldung ignoriert.

Ohne die erfindungsgemässe Redundanz mit den Partnermodulen würde sich folgender Betrieb einstellen:
Fällt in einem Kommunikationsmodul KM1, KM2, ... eine der modulzentralen Baugruppen MMG, MSM, MSMC, MCG oder IMLA aus, so ist dies gleichbedeutend mit dem Ausfall des entsprechenden Kommunikationsmoduls. Der Rest des Systems läuft weiter, bzw. bedingt weiter, je nachdem, ob es sich bei dem Ausfall um das Kommunikationsmodul mit einem Hintergrundspeicher HGS handelt oder nicht (das Kommunikationsmodul mit dem Hintergrundspeicher HGS beinhaltet die sog. Ladegruppe, welche anlagen-softwarespezifisch nur eimal im System vorhanden ist). Dasselbe gilt für den Ausfall einer der Schnittstellenfunktionseinheiten IMLA oder einer modulübergreifenden bidirektionalen Verbindung LWL1, LWL3. Ausfälle des übergeordneten Kommunikationsmoduls IMTU1 haben unterschiedliche Auswirkungen auf das Gesamtsystem. Durch die Aufteilung der Schaltmatrix auf die vier Teilmodule IMS1, ... IMS4 werden alle Anrufverbindungen gleichmässig auf die Teilmodule verteilt. Der Ausfall eines Teilmoduls bedeutet demnach eine Zerstörung von 25% der existierenden modulübergreifenden Anrufverbidungen und die Verringerung der maximal möglichen auf 75%. Ausfälle von IMMG oder IMCG sind gleichbedeutend mit dem Ausfall des Gesamtsystems, während der Ausfall eines einzelnen IMLA im Moment des Ausfalls nur das dort angeschlossene Modul vom Gesamtsystem trennt. Sind mehrere IMLA jedoch zu einer Baugruppe zusammengefasst, so muss für die Reparatur die defekte Baugruppe gezogen werden, wodurch alle anderen daran angeschlossenen Kommunikationsmodule vom Gesamtsystem getrennt werden (Teilausfälle).

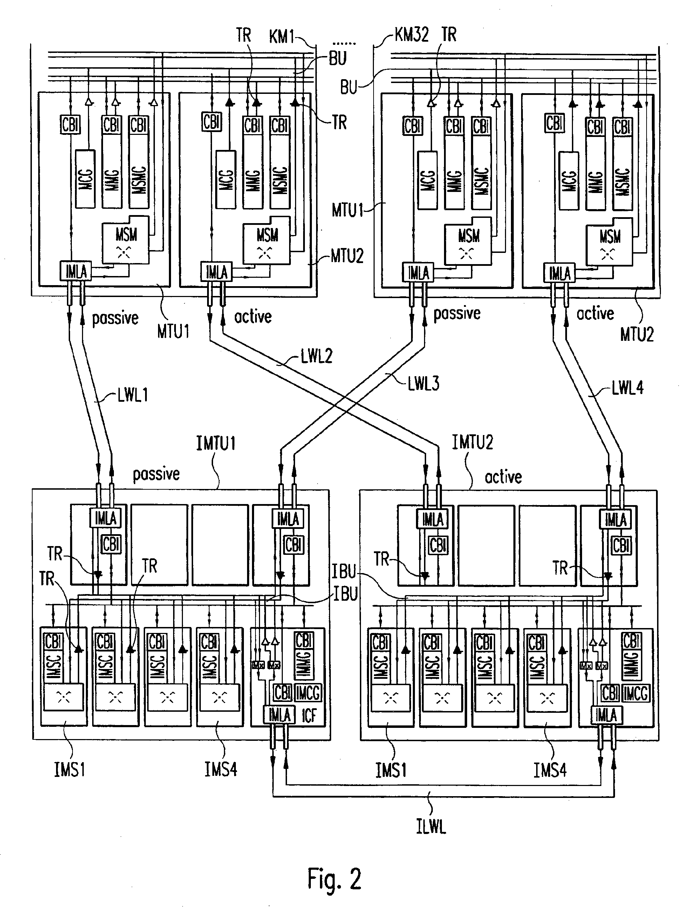

Bei der erfindungsgemässen Lösung sind daher mindestens zwei übergeordnete Kommunikationsmodule IMTU1 und sein redundantes Partnermodul IMTU2 vorgesehen und als Weiterbildung ist mindestens ein untergeordnetes Kommunikationsmodul KM1, KM2 ... versehen mit seinen redundanten Teilmodulen MTU1 und MTU2. Die Kommunikationsteilmodule MTU1 und das übergeordnete Kommunikationsmodul IMTU1 sind standardmässig als "aktive Systemhälfte" beispielsweise durch Steckplatzcodierung vordefiniert. Dazu gehören auch die entsprechenden modulübergreifenden bidirektionalen Verbindungen LWL1 und LWL3. Die passiv geschalteten Kommunikationsteilmodule MTU2 und das übergeordnete Kommunikationsmodul IMTU2 laufen im Bereitschaftsparallelbetrieb (hot-standby) mit; d.h.Funktionen im aktiven Kommunikationsteilmodul werden im passiv geschalteten Kommunikationsteilmodul MTU2 und dem übergeordneten Kommunikationsmodul IMTU2 immer synchron eingestellt. Dies wird über Cbus-Adressen realisiert, so daß die Teilmodule MTU1 und MTU2 jeweils in ihrem Kommunikationsmodul KM1, KM2, ... die selbe Verbindungseinstellmeldung empfangen. Gleiches gilt für die übergeordneten Kommunikationsmodule IMTU1 und IMTU2. Bei der Inbetriebnahme der passiven Kommunikations(teil)module im laufenden System geschieht der Abgleich bei den untergeordneten Kommunikationsteilmodulen MTU2 über einen Meldungstausch mit dem jeweiligen Teilmodul MTU1 über den Bus BU und beim übergeordneten Kommunikationsmodul IMTU2 über die bidirektionale modulübergreifende Verbindung ILWL mit dem übergeordneten Kommunikationsmodul IMTU1. Bei den aktiven Kommunikationsteilmodulen MTU1 sind die Bustreiber TR aktiv geschaltet, erkenntlich an den schwarz ausgefüllten Bustreibern. Bei Auftreten eines Ausfalls oder eines Fehlers gibt das defekte Kommunikationsteilmodul über seine Modul-Steuerung MMG eine Umschaltemeldung auf den Bus BU ab, um der Modul-Steuerung MMG des passiv geschalteten Kommunikationsteilmoduls mitzuteilen seine Bustreiber TR aktiv zu schalten und die Funktionen des defekten Kommunikationsteilmoduls voll zu übernehmen. Zusätzlich wird aber noch per Meldungstausch zwischen der beteiligten MMG und der IMMG des übergeordneten Kommunikationsmoduls IMTU1 dafür gesorgt, dass auch die anderen , fehlerfreien Kommunikationsmodule des Systems die Umschaltung nachvollziehen und somit eine komplette Systemhälftenumschaltung auf die "Hot-standby-Seite" stattfindet, deren sämtliche Teilfunktionseinheiten MTU2 danach komplett aktiv sind. Fig. 2 verdeutlicht dies. Nach der Umschaltung sind die bisher aktiven Kommunikationsteilmodule MTU1 und das übergeordnete Kommunikationsmodul IMTU1 passiv und die bisher im Bereitschaftsparallelbetrieb (hot-standby) arbeitenden Kommunikationsteilmodule MTU2 und das übergeordnete Kommunikationsmodul IMTU2 aktiv.

Liegt. die Fehlerursache in einem übergeordneten aktiven Kommunikationsmodul IMTU1, so kommt es ebenfalls zu einer Systemhälftenumschaltung, indem das zuvor redundante Kommunikationsmodul IMTU2 die Aktivität übernimmt (Meldungstausch oder Ausbleiben des Testmeldungsverkehrs zwischen den beiden IMMG über die ILWL-Verbindung der beiden Kommunikationsmodule IMTU1 und IMTU2), das seinerseits per Meldungstausch die Kommunikationsteilmodule MTU2 seiner Systemhälfte dazu auffordert, aktiv zu werden.

Ebenso verhält sich das System, wenn zentrale Teile der Baugruppe, die mehrere IMLA umfasst defekt sind. Dies gilt sowohl bei der Inbetriebnahme des Systems als auch während des laufenden Betriebs.

Das Vermittlungssystem geht bzw. bleibt trotz eines Ausfalls, bis auf eine kurze Störung während des Umschaltmoments, weiterhin in Betrieb. Die zum Zeitpunkt des Fehlers existierenden Verbindungen (Gespräche, Daten) gehen dabei nicht verloren (identische Koppelfeldeinstellungen beim hot-standby Kommunikationsmodul), was insbesondere für Standleitungen vorteilhaft ist.

Unabhängig vom Umschaltegrund wird gleichzeitig von den betroffenen MMG/IMMG eine den Umschaltegrund dokumentierende Fehlermeldung abgesetzt, wodurch ein Lockruf zu einem Service-Center initiiert werden kann. Das zuvor aktive und jetzt defekte Kommunikationsteilmodul befindet sich auf der passiven Systemhälfte, was durch eine Anzeigeeinrichtung AZ, z.B. Zustands-LED an einer zentralen Baugruppe, angezeigt wird, und kann vom Service-Personal ohne Störung des Systems entfernt bzw. ausgetauscht werden.

In einer Fehlermeldung wird vorteilhafterweise auch der Fehlertyp mitgeteilt anhand dessen die Art der Umschaltung dokumentiert wird. Es kommen insbesondere zwei Arten der Umschaltung in Frage: eine sogenannte Hardware (HW)- und eine sogenannte Software (SW)- Umschaltung, je nach dem ob eine schnelle Reaktion erforderlich ist oder nicht. Bei einem Systemtaktausfall, z.B. 8 MHz Takt, ist eine schnelle Reaktion erforderlich, um den Systembetrieb aufrecht zu erhalten. In diesem Fall findet eine von der Modul-Steuerung MMG des passiv geschalteten Kommunikationsmoduls gesteuerte HW-Umschaltung statt, die insbesondere die redundante Taktquelle innerhalb eines sehr kurzen Überwachungszeitraums "taktspritzerfrei" und pegelangepasst an die Verbraucher (Teilnehmerendgeräte) schalten muss. Alle anderen Ausfälle, wie beispielsweise die einer Modul-Steuerung MMG/IMMG, der Schaltmatrix MSM/IMSM oder der Steuereinrichtung MSMC/IMSMC für die Schaltmatrix oder der Taktaufbereitung MCG/IMCG (PLL-Fehler, Rahmentaktausfall etc.) sowie deren Hilfs- und Überwachungstakte, werden per Meldungstausch (MMG/IMMG-Software) der beiden Modul-Steuerungen MMG/IMMG kontrolliert und es erfolgt eine SW-Umschaltung. Auch in diesem Fall wird der Systemtakt pegelgenau umgeschaltet.

Auch die Hot-Standby-Seite wird ständig überwacht und der Ausfall eines ihrer Komponenten gemeldet (Lockruf), damit bei einem eventuellen Fehler der aktiven Systemhälfte, die dann benötigte Redundanz auch wirklich vorhanden ist. Die Umschaltung auf eine defekte Redundanz wird verweigert.

Weiterhin ist es vorteilhaft die Möglichkeit einer Service-Umschaltung vorzusehen. Dazu ist vorteilhafterweise auf der Frontleiste eines Kommunikationsmoduls, insbesondere wenn es in einem Gestell untergebracht ist, ein lokaler Schalter untergebracht, mittels dessen eine Umschaltung auf ein redundantes Kommunikations(teil)modul durchgeführt werden kann und ein jeweils passiv geschaltetes Kommunikationsmodul beispielsweise für Service- oder Wartungszwecke störungsfrei aus dem System entfernt werden kann, z.B. für den Austausch der Modul-Steuerungssoftware IMMG/MMG oder einen Download für Schaltmatrix (Koppelfeld)-, Töne- und Sprachansagen-Software. Diese Service-Umschaltung kann auch über ein Fernwirksignal oder durch ein Systemterminal aktiviert werden.

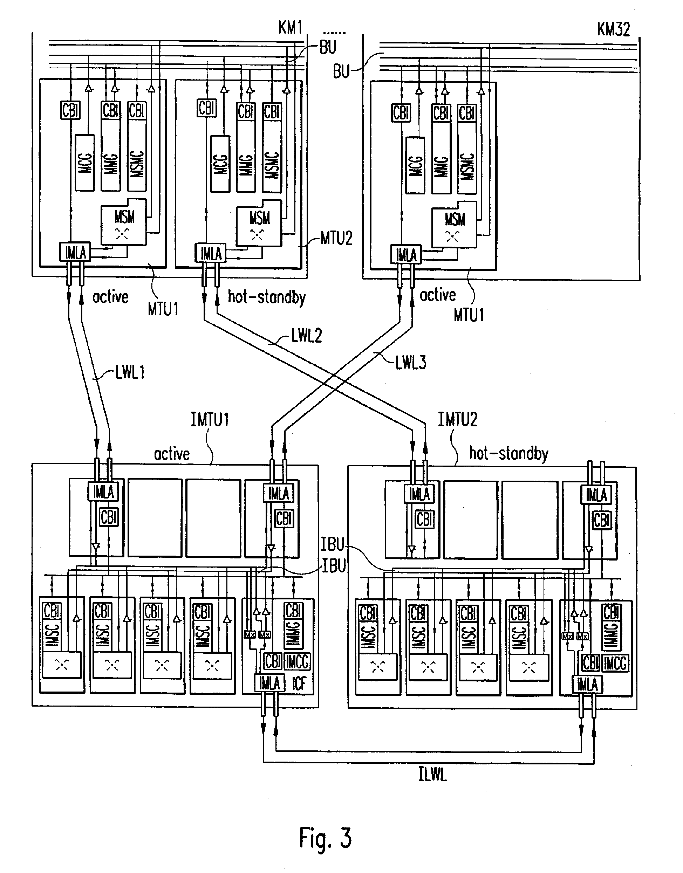

In dem erfindungsgemässen Vermittlungssystem sind auch untergeordnete Kommunikationsmodule KM1, KM2 .... zugelassen, die über kein redundantes Partnerteilmodul MTU2 verfügen. Bei dem in Fig. 3 gezeigten Ausführungsbeispiel weist das Kommunikationsmodul KM32 kein Partnerteilmodul auf. Die ungedoppelten Kommunikationsmodule sind immer auf der zuvor erwähnten aktiven Systemhälfte angeschlossen. Kommt es zu einer Systemhälftenumschaltung (Fehler eines weiteren aber gedoppelten Kommunikationsmoduls oder Service-Umschaltung) werden solche ungedoppelten Module allerdings vom Rest des Systems abgekoppelt - ihr Fehlerverhalten bleibt identisch zum ungedoppelten System.

Bei den bisherigen Ausführungsbeispielen wurde von einem Einfachfehler ausgegangen. Ein Fehler konnte dort einmalig abgewehrt werden, indem infolge eines Ausfalls einer Teilfunktionseinheit (Baugruppe) auf der aktiven Seite immer eine komplette Systemhälftenumschaltung durchgeführt wurde. Eventuell ungedoppelte Kommunikationsmodule wurden vom System (Vermittlungseinrichtung) abgekoppelt und fallen in der Regel komplett aus.

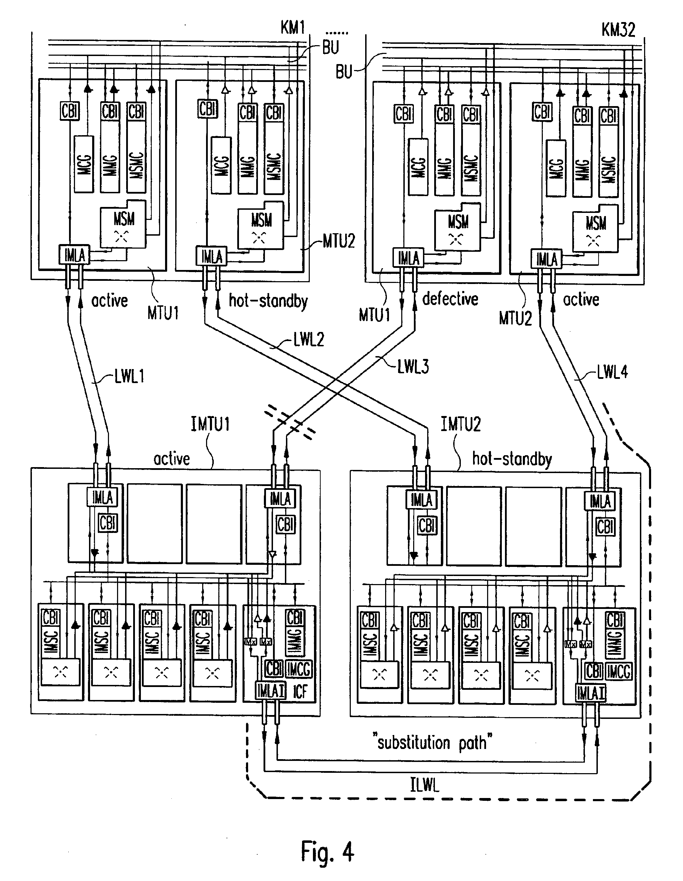

Eine höhere Teilsystemausfallsicherheit gedoppelter als auch ungedoppelter Kommunikationsmodule wird durch eine sogenannte Ersatzwegschaltung erreicht, die anhand der Figuren 4 bis 7 näher erläutert wird. Wie zuvor erläutert ist bei Inbetriebnahme standardmässig eine "aktive Systemhälfte" vordefiniert (Steckplatz-Codierung), die sich aus den, jeweils aktiven Kommunikationsteilmodulen MTU1 von KM1, KM2, ... deren LWL-Strecken und der aktiven übergeordneten IMTU1 zusammensetzt, während die gedoppelten Komponenten gemeinsam die Hot-standby-Seite bilden (vgl. Fig. 1).

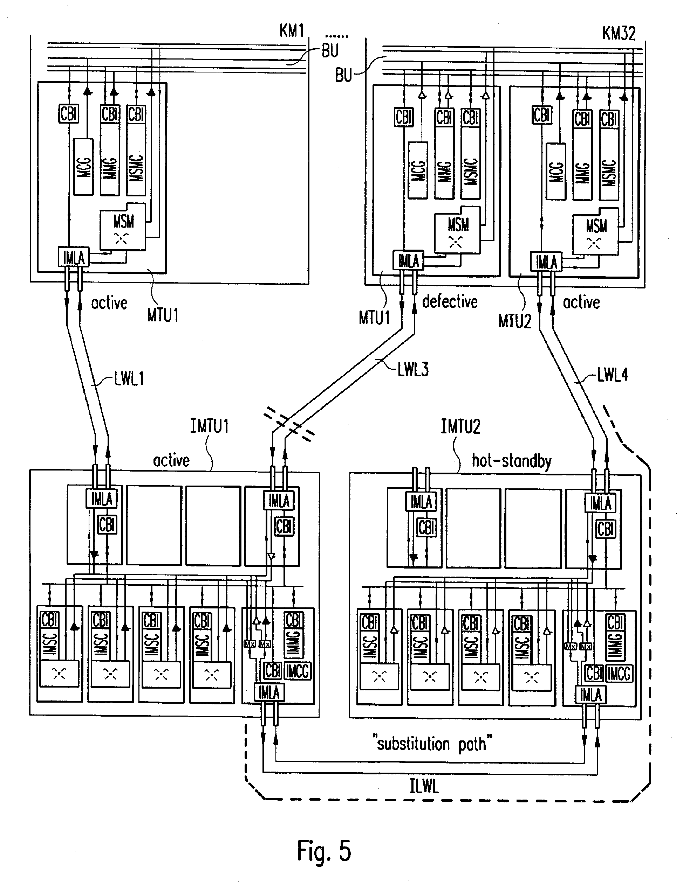

Tritt jetzt bei der Variante mit erhöhter Teilsystemausfallsicherheit ein Fehler in einem der aktiven Kommunikationsteilmodule MTU1 auf, so findet nur bezüglich dieses fehlerhaften Kommunikationsmoduls eine Umschaltung auf sein redundantes Partnermodul MTU2 statt und sämtliche Verbindungen werden IMMG-SW-gesteuert über die Verbindung ILWL zwischen den beiden übergeordneten Kommunikationsmodulen IMTU1 und IMTU2 umgeleitet. Wie in Fig. 4 dargestellt, sei im Kommunikationsmodul KM32 das Teilmodul MTU1 oder seine zugehörige LWL3 ausgefallen und die Verbindungen von und zu diesem Kommunikationsmodul werden über den "substitution path" (gestrichelt) ersatzgeschaltet. Die vorhandene Redundanz wird nur partiell benutzt. Dadurch reduzieren sich die bei der Umschaltung auftretenden kurzfristigen Störungen nur auf das betreffende Kommunikationsmodul selbst und seine modulübergreifenden Verbindungen - der grösste Teil der Vermittlungseinrichtung bleibt unangetastet. Desweiteren verbleiben eventuell vorhandene ungedoppelte Kommunikationsmodule bei dieser Art der Umschaltung auf der aktiven Seite des Systems (vgl. Fig. 5 - das Kommunikationsmodul KM1 besitzt kein Partnermodul). Sie werden nicht wie bei der zuvor beschriebenen Systemhälftenumschaltung vom System abgekoppelt.

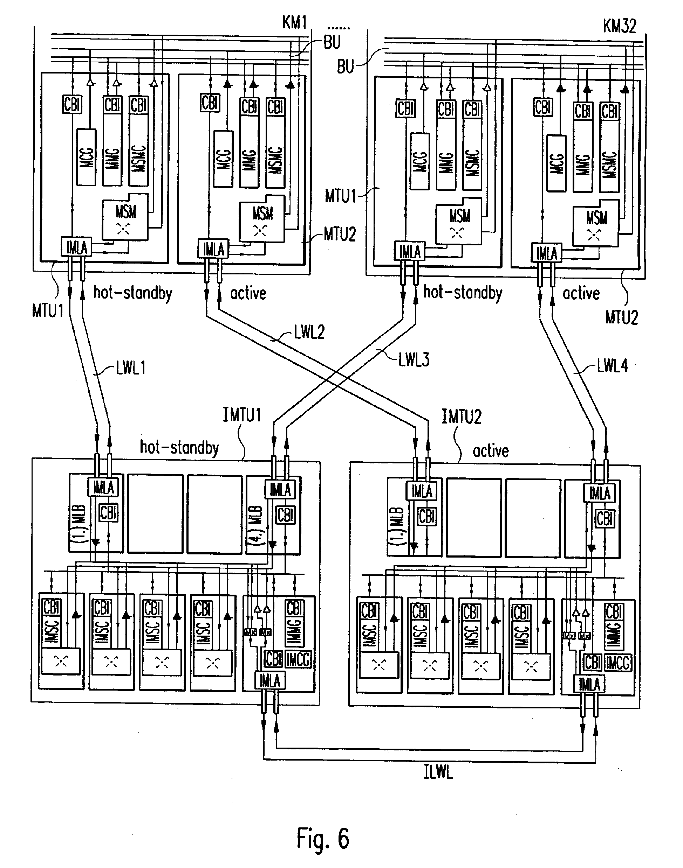

Der Ersatzweg gemäss Fig. 4 kann nur für ein einziges Kommunikationsmodul geschaltet werden. Folgt nun bei weiterhin bestehendem ersten Fehler ein Ausfall des aktiven Teilmoduls MTU in einem weiteren Kommunikationsmodul so kommt es zu der zuvor beschriebenen Systemhälftenumschaltung. Der Ersatzweg gemäss Fig. 4 wird aufgelöst und die zuvor im Bereitschaftsparallelbetrieb arbeitenden Kommunikationsteilmodule (hot-standby-Seite) werden komplett zu aktiven Kommunikationsteilmodulen (Fig. 6). Erst jetzt werden im System vorhandene ungedoppelte Kommunikationsmodule abgetrennt und fallen aus.

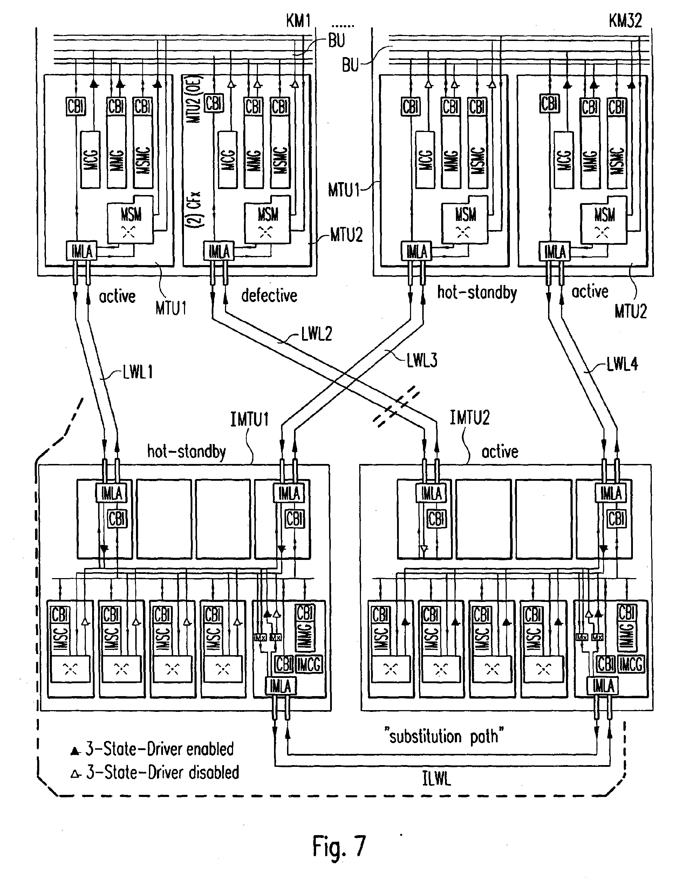

Entsteht danach, während die beiden ersten Ausfälle noch existieren, in einem Kommunikationsmodul, das bisher nicht an Fehlern oder Ausfällen beteiligt war, z.B. am Teilmodul MTU2 im Kommunikationsmodul KM1, ein Fehler, so wird für dieses erneut ein Ersatzweg geschaltet. Diesmal jedoch in umgekehrter Richtung; d.h. der Ersatzweg (gestrichelt) geht aus vom Kommunikationsteilmodul MTU1 im Kommunikationsmodul KM1 zum übergeordneten Kommunikationsmodul IMTU1 (jetzt hot standby) und dann über den "substitution path" mittels ILWL zum übergeordneten Kommunikationsmodul IMTU2 (jetzt active) und von dort aus zu den anderen aktiven Kommunikationsteilmodulen MTU2 der Vermittlungseinrichtung (vgl. Fig. 7).

Mit der zuletzt vorgestellten Variante der erfindungsgemässen Vermittlungseinrichtung können bis zu drei Teilsystemausfälle in verschiedenen Kommunikationsmodulen abgefangen werden. Im Vermittlungssystem befindliche ungedoppelte Kommunikationsmodule werden erst mit dem zweiten Ausfall eines aktiven Kommunikationsmoduls vom System zwangsabgekoppelt. Die Systemverfügbarkeit bei einem Teilfunktionsausfall einer Schaltmatrix in einem übergeordneten Kommunikationsmodul IMTU1 oder IMTU2 wird ebenfalls verbessert, weil danach eine Ersatzwegschaltung für ein. Teilmodul noch möglich ist.

Nachfolgend werden nun vorteilhafte Ausgestaltungen zur gegenseitigen Überwachung der Kommunikationsmodule sowie zur geordneten Umschaltung vorgestellt.

Die Modul-Steuerungen MMG bzw. IMMG sind aus Sicht des Busses BU bzw. IBU ganz normale Busteilnehmer, die Meldungen vom Bus empfangen oder Meldungen senden und die Busteilnehmer sowie die zentralen Hardwarekomponenten in den einzelnen Kommunikationsmodulen überwachen. Auch überwachen sich die MMG bzw. IMMG verschiedener Kommunikationsmodule gegenseitig. Weiterhin werden von ihnen die modulübergreifenden Verbindungen LWL1, LWL2, ...., ILWL überprüft und in den Schnittstellenbausteinen CBI Filterfunktionen eingestellt, die je nach Betriebszustand verändert werden müssen. Informationen, die ein MMG hardwaremässig nicht selbst ermitteln kann, erhält er von einem übergeordneten IMMG mitgeteilt.

Eine Modul-Steuerung MMG bzw. IMMG nimmt Überwachungsfunktionen über einen zyklischen Testmeldungsverkehr wahr zur Erkennung von an einem Bus hinzukommenden oder ausser Betrieb gehenden Busteilnehmer. Veränderungen werden der Anlagensoftware mittels An- oder Abmeldung mitgeteilt. Über eine Berechtigtmeldung von der Anlagensoftware erhält ein MMG bzw. IMMG die Erlaubnis zum An- und Abmelden von Busteilnehmern, sowie die Adresse an die die An- und Abmeldungen zu erfolgen haben. Ein MMG bzw. IMMG übernimmt auch den Reset von Busteilnehmern. Dabei werden die rückzusetzenden Busteilnehmer dem MMG bzw. IMMG mittels einer Resetauftragsmeldung von der Anlagensoftware mitgeteilt. Weiterhin werden folgende Aufgaben übernommen:
- zeitweise Einstellung des Testmeldungsverkehrs zu ausgewählten Busteilnehmern mit zeitgesteuerter Testmeldungsreaktivierung nach ausbleibender Reaktivierungsmeldung.
- Ansteuerung von Signalen einer zentralen Anzeigeeinheit,
- Abfrage des Zustandes der zentralen Anzeigeeinheit,
- Abfrage des Zustandes von Eingangssignalen eines Kommunikationsmoduls, die sonst nur automatisch bei einem Zustandswechsel gemeldet werden,
- Durchführung einer Umschaltung zu Servicezwecken, die durch eine Meldung initiiert wird (Servicefernumschaltung).

Zur weiteren Aufgabe einer MMG bzw. IMMG gehört die Überwachung von Fehlersituationen auf einem Kommunikationsmodul, die zu einer Meldung oder Umschaltung führen müssen. Hardwaresignale auf dem "Schienendruck" eines Kommunikationsmoduls werden zyklisch überwacht und bei Veränderungen automatisch oder auf Anfrage jederzeit gemeldet.

Die Taktaufbereitung MCG bzw. IMCG in einem Kommunikationsmodul wird in Zusammenarbeit mit einer takteinspeisenden Baugruppe und den anderen MMG bzw. IMMG eingestellt, um die Taktsynchronisierung des Gesamtsystems zu koordinieren. Es wird dafür gesorgt, dass in einem mehrmoduligen System immmer nur ein Kommunikationsmodul der Taktlieferant für das ganze System ist. Fehler in der Taktaufbereitung werden an eine Zentrale gemeldet und wenn nötig und möglich auch Umschaltungen auf das jeweilige redundante Partnermodul (mit gedoppelter Taktaufbereitung MCG bzw. IMCG) durchgeführt.

Die Überwachung der Verbindungsstrecken, die insbesondere als LWL-Strecken ausgelegt sind, durch die MMG bzw. IMMG erfolgt über Hardwaresignale und Testmeldungen zu den in anderen Kommunikationsmodulen befindlichen MMG bzw. IMMG. Die In- bzw. Außerbetriebnahme der LWL-Strecken wird bei einer Zentrale an- oder abgemeldet. Wenn nötig werden Umschaltungen auf die redundanten Partnermodule vorgenommen. Anmeldungen von neu hinzukommenden LWL-Strecken werden erst dann getätigt, wenn nach Erkennung der hinzukommenden Hardware auch eine Testmeldung über diese Strecke erfolgt ist. Abmeldungen von LWL-Strecken erfolgen sofort nach Erkennung der ausgefallenen Hardware. Während Umschaltvorgängen und auch während der Erkennung fehlerhafter LWL-Strecken werden in den Schnittstellen zum Bus Filterfunktionen eingestellt, die z.B. Meldungen mit bestimmten Adressierungsarten nicht passieren lassen. Teilweise werden auch Strecken zeitweise komplett gesperrt.

Mittels Hardware wird dafür gesorgt, dass bei redundanten Kommunikationsmodulen immer nur ein Kommunikationsteilmodul aktiv sein kann. Werden Modul-Steuerungen MMG über ihre logische Adresse angesprochen, fühlt sich immer nur der aktive MMG angesprochen. Von der aktiven MMG werden alle Funktionen durchgeführt. Die inaktive MMG führt keinen Testmeldungsverkehr durch. Er betreibt nur den Testmeldungsverkehr zu anderen Modul-Steuerungen MMG bzw. IMMG und übernimmt Tätigkeiten, die notwendig sind, um eine eventuelle Umschaltung vorzunehmen.

Bei gedoppelten Kommunikationsmodulen überwachen sich die beiden Modul-Steuerungen gegenseitig mittels Hardwareleitungen und Testmeldungen. Der Ausfall eines MMG wird gemeldet. Bei Ausfall eines aktiven MMG wird wenn möglich eine Umschaltung auf den gedoppelten derzeit nicht aktiv geschalteten MMG vorgenommen. Ein aktiver MMG meldet den Ausfall des gedoppelten nicht aktiv geschalteten MMG und damit den Redundanzverlust. Erkennt ein nicht aktiv geschalteter MMG den Ausfall des aktiven MMG, so wird das gemeldet und die Aktivität für dieses Kommunikationsmodul wenn möglich übernommen.

Bei mehrmoduligen Systemen erfolgt die Umschaltung im eigenen Kommunikationsmodul in Absprache mit der Modul-Steuerung IMMG im übergeordneten Kommunikationsmodul, um die Umschaltung zu koordinieren. Der zur Vorbereitung einer Umschaltung notwendige Meldungstausch zwischen Kommunikationsmodulen erfolgt immer über die LWL-Strecke, die nach der Umschaltung die aktive Strecke wird.

Meldungen zum Anmelden eines Umschaltwunsches (Mode Switch Request) werden zwischen den Modulsteuerungen MMG innerhalb eines Kommunikationsmoduls und auch modulübergreifend verwendet. Beim Ausbleiben einer Reaktion innerhalb des Kommunikationsmoduls erfolgt eine Wiederholung des "Mode Switch Request" nach beispielsweise 5 Sekunden. Beim Ausbleiben einer modulübergreifenden Reaktion erfolgt eine Wiederholung des "Mode Switch Request" nach beispielsweise 4 Sekunden. Wird eine modulübergreifende "Mode Switch Request" Wiederholung notwendig, die von einem internen "Mode Switch Request" ausgelöst wurde, wird der Nachbar-Modul-Steuerung MMG per Meldung aufgefordert, seine interne Wiederholungszeit noch einmel zu starten. Um hier keine Konflikte zu haben, ist die interne Wiederholungszeit bewusst grösser gewahlt als die externe.

Erkennt der aktive MMG eine Umschaltbedingung, beauftragt er die Modul-Steuerung MMG im nicht aktiv geschalteten Kommunikationsteilmodul die Umschaltung in Zusammenarbeit mit dem IMMG im an ihn direkt angeschlossenen übergeordneten Kommunikationsmodul durchzuführen. Die MMG/IMMG in den beiden Kommunikationsmodulen kommunizieren über die noch passiv geschaltete Strecke miteinander und führen die Umschaltung durch. Erkennt der nicht aktiv geschaltete MMG eine Umschaltbedingung, nimmt er direkt Kontakt zum IMMG im an ihm direkt angeschlossenen übergeordneten Kommunikationsmodul auf.

Schaltet die Hardware in einem Komunikationsmodul durch eine Selbsterkennung um, weil das aktive Kommunikationsteilmodul total ausgefallen ist, bemerkt dies die passive Teilmodul-Steuerung MMG in diesem Kommunikationsmodul, ohne den Grund dafür zu kennen. In diesem Fall muss die aktiv gewordene Modul-Steuerung MMG in diesem Kommunikationsmodul nach erfolgter Umschaltung die Umschaltung im angeschlossenen übergeordneten Kommunikationsmodul in die Wege leiten.

Die Testmeldungen zu den Busteilnehmern, sowie die An- und Abmeldungen werden nur von der aktiven Modul-Steuerung MMG durchgeführt. Damit die nicht aktiv geschaltete Modul-Steuerung MMG bei einer eventuellen Umschaltung als aktive Modul-Steuerung MMG den Testmeldungsverkehr zu den Busteilnehmern richtig durchführen kann, erfolgt nach jeder Statusänderung der Busteilnehmer ein Statusabgleich von der aktiven zur nicht aktiv geschalteten Modul-Steuerung MMG. Eine nicht aktiv geschaltete Modul-Steuerung MMG fordert nach jedem Neustart, den für sich notwendigen Status von der benachbarten aktiven Modul-Steuerung MMG an. Führt eine aktive Modul-Steuerung MMG eine Umschaltung zu ihrem redundanten Kommunikationsmodul durch, überträgt sie der nicht aktiv geschalteten MMG, auf die umgeschaltet werden soll, den Status. Wird die Umschaltung von der nicht aktiv geschalteten Modul-Steuerung MMG durchgeführt, entfällt der Statusabgleich von der aktiven zur nicht aktiv geschalteten Modul-Steuerung MMG. Hiermit wird vermieden; dass die nicht aktiv geschaltete Modul-Steuerung MMG einen eventuell falschen Status erhält. Eine nicht aktiv geschaltete Modul-Steuerung muss beim Holen der Aktivität davon ausgehen, dass ein falscher Status in der aktiven Modul-Steuerung MMG vorliegen kann. In diesem Fall unterbleibt deshalb der Statusabgleich.

Die Modul-Steuerung für das Kommunikationsmodul mit der zentralen Fehleranzeige erhält von den Kommunikationsmodulen Informationen, immer wenn sich in einem Kommunikationsmodul etwas verändert, was für die Modul-Steuerung mit der zentralen Fehleranzeige wichtig ist. Desweiteren hat diese Modul-Steuerung die Möglichkeit diese Informationen auch mit einer logisch adressierten Abfrage von allen Kommunikationsmodulen des Systems zu erhalten. Die Modul-Steuerung MMG mit zentraler Fehleranzeige wird über eine logische Adresse erreicht, so dass die Absender einer für sie bestimmten Meldung die exakte Adresse nicht benötigen. Kommt die Modul-Steuerung mit Zentralfunktion aus dem Reset, fordert es Informationen an, die in anderen Kommunikationsmodulen zur Verfügung stehen. Hierzu adressiert die Modul-Steuerung mit Zentralfunktion alle Modul-Steuerungen im System über deren gemeinsame logische Adresse. Da bei Dopplung die beiden redundanten Modul-Steuerungen die benötigten Informationen liefern können, antwortet nur die aktive Modul-Steuerung MMG und zwar an die nur einmal im System vorhandene logische Adresse der Modul-Steuerung MMG mit Zentralfunktion.

Fällt eine LWL-Strecke zwischen einem aktiven Teilmodul und dem übergeordneten aktiven Kommunikationsmodul aus, wird dies von beiden Modulsteuerungen MMG und IMMG erkannt, aber die Umschalteaktion wird nur vom MMG gestartet. Zur Durchführung der Umschaltung fordert der aktive MMG, an den die ausgefallene LWL-Strecke angeschlossen ist, den Nachbar-MMG im selben Kommunikationsmodul auf, mit dem an der gemeinsamen noch passiven LWL-Strecke liegenden übergeordneten Kommunikationsmodul mit IMMG, die Umschaltung vorzunehmen. Das derzeit noch passive übergeordnete Kommunikationsmodul bzw. sein IMMG nimmt mit dem aktiven übergeordneten Kommunikationsmodul bzw. seinem IMMG Kontakt auf, an dem die defekte LWL-Strecke liegt. Die beiden übergeordneten Kommunikationsmodule bzw. ihre IMMG entscheiden dann, ob eine Ersatzwegumschaltung oder Systemhälftenumschaltung vollzogen wird. Der Ausfall der LWL-Strecke wird von den Modulsteuerungen MMG und IMMG jeweils durch eine Fehlermeldung dokumentiert.

Die Modul-Steuerung IMMG eines übergeordneten Kommunikationsmoduls IMTU1 hat in der Initialisierungsphase die Aufgabe, Einstellungen der Schnittstellen CBI für die LWL-Strecken zu den Kommunikationsmodulen und zum Partnermodul IMTU2 und die Kommunikationsmodul-Adressverteilung (physikalische Modulnummer) der jeweiligen Systemhälfte vorzunehmen. Bei den Einstellungen der Schnittstellen CBI werden Filterfunktionen benutzt, die eine Meldungsverdopplung von Broadcastmeldungen verhindern. Anschliessend wird mit jeder betriebsbereiten Modul-Steuerung MMG, der Modul-Steuerung IMMG im redundanten übergeordneten Kommunikationsmodul IMTU2 und mit allen Busteilnehmern innerhalb des übergeordneten Kommunikationsmoduls IMTU1 der Testmeldungsverkehr aufgenommen. Der Testmeldungsverkehr ist ein zyklischer Meldungstausch, z. B. alle vier Sekunden, und dient zur Überwachung der Betriebsbereitschaft und zur Kontrolle des Betriebszustandes der Kommunikationsmodule untereinander. Jede Modul-Steuerung IMMG meldet sich im System an, nachdem mit der zweiten IMMG im redundanten Kommunikationsmodul über Testmeldungen Kontakt aufgenommen wurde, spätestens nach beispielsweise 16 Sekunden, wenn die redundante IMMG nicht betriebsbereit ist oder die modulübergreifende Verbindung ILWL zwischen den übergeordneten Kommunikationsmodulen IMTU1 und IMTU2 gestört ist. Danach werden die modulübergreifenden LWL-Strecken zu den Kommunikationsmodulen angemeldet, mit denen Testmeldungsverkehr aufgenommen worden ist. Der Betriebsmode (aktiv/passiv) der Modul-Steuerung IMMG sowie die zugehörige physikalische Modulnummer wird nach dem Reset durch eine DIP Schalterstellung auf dem jeweiligen übergeordneten Kommunikationsmodul bestimmt, wobei die im aktiven Betriebsmode befindliche Modul-Steuerung IMMG die Kontrolle über das System bezüglich Umschaltungsanforderungen erhält (Masterfunktion). Eine Betriebsmode-Umschaltungsanforderung muss quittiert werden oder abgelehnt werden. Fehlt die Quittierung oder wird in der Testmeldung festgestellt, dass die Umschaltung nicht durchgeführt worden ist, so wird die Anforderung wiederholt, z. B. nach vier Sekunden. Bei erneuter Verweigerung wird der Prozess abgebrochen. Jeder Umschaltvorgang wird protokolliert.

Nicht gedoppelte Kommunikationsmodule werden an das nach dem Reset im aktiven Betriebsmode befindliche übergeordnete Kommunikationsmodul IMTU1 angeschlossen. Ist nach einer Systemhälftenumschaltung ein nicht gedoppeltes Kommunikationsmodul mit dem passiv geschalteten übergeordneten Kommunikationsmodul IMTU1 bzw. IMTU2 verbunden, so wird in diesem Kommunikationsmodul die LWL-Strecke für die Meldungsübertragung gesperrt (Sender und Empfänger der CBI sind disabled).

Die Inbetriebnahmephase eines übergeordneten Kommunikationsmoduls IMTU wird mit einer Meldung vom Betriebssystem eingeleitet und mit der vermittlungstechnischen Inbetriebnahme der Schaltmatrix (Koppelfeld) IMSM beziehungsweise deren Teilmodule IMS1 ... IMS4 abgeschlossen. Hiebei werden alle betriebsbereiten Busteilnehmer im übergeordneten Kommunikationsmodul IMTU dem System angemeldet und in Betrieb genommen. Betriebsmode-Umschaltanforderungen sind hier nur zulässig zwischen den beiden IMMG oder vom aktiven IMMG zum MMG des jeweiligen Kommunikationsmoduls, das falsch verbunden ist (passive path), nämlich aktiver IMMG zum nicht aktiv geschalteten MMG (das CBI der modulübergreifenden befindet sich im passive mode). Eine Umschaltanforderung zwischen den IMMG führt zu einer Systemhälftenumschaltung ausgelöst durch:
- Ausfall eines im aktiven Betriebsmode befindlichen Kommunikationsmoduls IMTU (kein Testmeldungsverkehr bzw. erneute IMMG Anmeldung),
- fehlende Masterfunktion (keine im aktiven Betriebsmode arbeitende IMMG),
- fehlerhafte vermittlungstechnische Inbetriebnahme der Schaltmatrix (des Koppelfeldes) im aktiven Kommunikationsmodul IMTU1 bzw. IMTU2, während die Inbetriebnahme im passiv geschalteten Kommunikationsmodul IMTU2 bzw. IMTU1 erfolgreich abgeschlossen ist.

Ist die modulübergreifende LWL-Strecke zwischen den beiden übergeordneten Kommunikationsmodulen IMTU1 und IMTU2 gestört, so wird die Betriebsmode-Umschaltanforderung über ein betriebsbereites redundantes Kommunikationsmodul, das zu den beiden IMMG der übergeordneten Kommunikationsmodule IMTU1 und IMTU2 eine Verbindung hat, an das jeweilige übergeordete Kommunikationsmodul IMTU1 bzw. IMTU2 weitergeleitet.

Eine gültige Betriebsmode-Umschaltanforderung von einem MMG, verursacht durch den Ausfall des aktiven MMG, einem Ausfall einer modulübergreifenden Verbindung oder durch eine Service-Umschaltung, bewirkt die Einrichtung oder Aufhebung einer Ersatzwegschaltung (modulübergreifende Verbindung zwischen den beiden übergeordneten Kommunikationsmodulen IMTU1 und IMTU2), falls nicht schon für ein anderes Kommunikationsmodul der Ersatzweg geschaltet worden ist. Ist dies der Fall, so wird eine Systemhälftenumschaltung durchgeführt. Wird von dem aktiven IMMG über den Testmeldungsverkehr erkannt, dass ein Kommunikationsmodul falsch verbunden ist (passive path), so werden die MMGs von einem Kommunikationsmodul mit einer Betriebsmode-Umschaltanforderung aufgefordert, ihren Betriebsmode umzuschalten. Ein Ersatzweg kann nur geschaltet werden, wenn jeweils die Schaltmatrix (das Koppelfeld) in den beiden Kommunikationsmodulen IMTU1 und IMTU2 und die modulübergreifende Verbindung ILWL zwischen diesen beiden übergeordneten Kommunikationsmodulen betriebsbereit sind. Die Anforderung ist gültig, wenn der aktiv zu schaltende MMG und dessen modulübergreifende LWL-Strecke betriebsbereit sind, kein Umschaltanforderungsprozess in Bearbeitung ist und die Meldung eine richtige Kennung für den durchzuführenden Umschaltvorgang aufweist.

Ein taktlieferndes Kommunikationsmodul beauftragt über eine Meldung den aktiven IMMG diesen Takt zur Synchronisation zu nehmen. Der IMMG stellt seine Funktionen auf das taktliefernde Kommunikationsmodul ein und verteilt den Takt weiter über die modulübergreifenden Verbindungen LWL1, LWL2, ..., ILWL. Ein Taktausfall, d.h. ein Kommunikationsteilmodul oder'eine modulübergreifende LWL-Strecke von einem Kommunikationsmodul zum übergeordneten Kommunikationsmodul IMTU1 ist nicht betriebsbereit bzw. das Kommunikationsmodul signalisiert in der Testantwort dass es kein Taktmaster ist, führt automatisch im aktiven übergeordneten Kommunikationsmodul IMTU1 zu einer Taktmode-Umschaltung ("Master/Freilauf"), wobei sich die angeschlossenen Kommunikationsmodule nun auf diesen Takt synchronisieren. Wird eine Betriebsmode-Umschaltanforderung gestellt, vom taktliefernden Kommunikationsmodul zum aktiven IMMG oder von dem IMMG selbst, und ein Ersatzweg geschaltet, dann stellt der passive IMMG im übergeordneten Partnermodul IMTU2 seine Funktionen auf das taktliefernde Kommunikationsmodul ein und verteilt den Takt, vorausgesetzt die modulübergreifenden LWL-Strecken zu diesem Kommunikationsmodul und zum aktiven IMMG sind betriebsbereit. Danach wird im aktiven übergeordneten Kommunikationsmodul IMTU1 der Takt auf die ILWL Verbindung zum Partnermodul IMTU2 geführt.

Bei einer Systemhälftenumschaltung werden alle Modul-Steuerungen MMG mit einer Broadcast-Meldung aufgefordert umzuschalten (aktiv/passiv Mode). Umschaltanforderungen an einzelne MMG werden mit der jeweiligen physikalischen Modulnummer adressiert.

Eine Systemhälftenumschaltung wird veranlasst bei:
- einer gültigen Betriebsmode-Umschaltanforderung von einem MMG, wenn bereits für ein anderes Kommunikationsmodul ein Ersatzweg geschaltet ist,
- Ausfall eines Schaltmatrix-Teilmoduls IMS1 .... IMS4 im aktiven Kommunikationsmodul IMTU1, wobei die Schaltmatrix im passiv geschalteten Kommunikationsmodul IMTU2 in Betrieb ist (ist die LWL-Strecke ILWL zwischen IMTU1 und IMTU2 gestört, so wird die Betriebsmode-Umschaltanforderung über ein betriebsbereites redundantes Kommunikationsmodul weitergeleitet),
- Ausfall des zweiten im aktiven Betriebsmode befindlichen Kommunikationsmoduls IMTU2,
- Service-Umschaltung im Kommunikationsmodul IMTU1 oder IMTU2, wobei die modulübergreifende LWL-Strecke ILWL zwischen IMTU1 und IMTU2 betriebsbereit ist und die Schaltmatrix IMS1...4 im passiven übergeordneten Kommunikationsmodul IMTU erfolgreich in Betrieb genommen wurde,
- eine gültige Betriebsmode-Umschaltanforderung von einem MMG und die LWL-Strecke ILWL ist nicht betriebsbereit (Ersatzweg kann nicht geschaltet werden).

Ist ein Ersatzweg geschaltet und es kommt zu einer Systemhälftenumschaltung, dann werden in den Kommunikationsmodulen IMTU1 und IMTU2 die Einstellungen für den Ersatzweg bezüglich des betreffenden Kommunikationsmoduls wieder zurückgenommen.

Ist ein Ersatzweg für ein Kommunikationsmodul geschaltet, so findet die Meldungsübertragung zwischen dem aktiven übergeordneten Kommunikationsmodul und dem Kommunikationsmodul statt über die eingestellte Verbindung ILWL zum passiv geschalteten übergeordneten Kommunikationsmodul, dann über die geschaltete modulübergreifende Verbindung LWL1, bzw. LWL2, .... zum Kommunikationsmodul. Hierbei müssen entsprechende Einstellungen bezüglich der Schnittstellen CBI der betreffenden modulübergreifenden LWL-Strecken, den Bustreibern für die Gesprächsverbindungen und den Treibern für den Synchrontakt in den beiden übergeorneten Kommunikationsmodulen IMTU1 und IMTU2 vorgenommen werden.

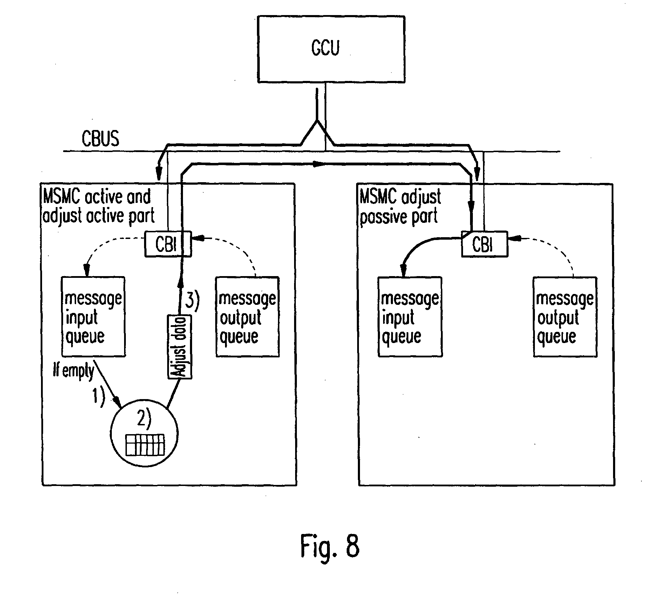

Nachfolgend wird der Abgleich Steuereinrichtungen MSMC bzw. IMSMC für die Schaltmatrizen MSM/IMSM bzw. deren Teilmodule anhand der Fig. 8 beschrieben.

Alle vermittlungstechnischen Meldungen werden von übergeordneten vermittlungstechnischen Software-Baugruppen GCU an eine logische CBI(Busschnittstellen)-Adresse gesendet. Damit werden diese Meldungen sowohl von der aktiven Schaltmatrix-Steuereinrichtung MSMC als auch von der passiv geschalteten MSMC empfangen und bearbeitet. Von den beiden MSMC werden also dieselben Verbindungen, Konferenzen, Hörtöne, Sprachansagen und DTMF-Receiver eingestellt, aber nur auf der aktiven MSMC sind die Bustreiber TR freigegeben. Wird während dem Betrieb ein Defekt erkannt, so sendet die entsprechende MSMC an die GCU eine "MSMC hardware defect"-Meldung. Zusätzlich setzt diese MSMC auch noch ein "MSMC defect"-Signal zum MMG und nimmt das "MSMC operation"-Signal zurück. Damit erkennt der MMG den MSMC-Ausfall und veranlasst ggf. eine Umschaltung des betreffenden Kommunikationsteilmoduls auf sein Partnermodul.

Ziel des Abgleichs ist es eine neu in Betrieb gehende passiv geschaltete MSMC in den gleichen Zustand zu versetzen, wie die bereits normal arbeitende aktive MSMC, um bei einer eventuellen Kommunikationsmodul-Umschaltung gleiche Schaltmatrix(Koppelfeld)-Einstellungen zu garantieren. Dazu werden die gerade aktuellen Einstellungen von der aktiven MSMC der passiv geschalteten MSMC mitgeteilt. Die passiv geschaltete MSMC stellt dann diese aktuellen Einstellungen ihrer Schaltmatrix MSM sowie sonstigen für den Bereitschaftsparallelbetrieb wichtigen Baugruppen zur Verfügung.

Abgeglichen werden insbesondere folgende Funktionen:
- Zeitschlitze für ein Kommunikationsmodul in Empfangsrichtung,
- Zeitschlitze für modulübergreifende Verbindungen in Senderichtung,
- Konferenzschaltungen.

Da während der Zeit, in der die beiden MSMC sich abgleichen weiterhin neue Einstellmeldungen von der GCU erzeugt werden und bei den beiden MSMC eintreffen und bearbeitet werden, sind Fehler beim Abgleich nicht generell auszuschliessen. Beim hier vorgestellten Abgleich werden diese Fehler weitgehend minimiert.

Aufgrund möglicher unterschiedlicher Koppelfeldausbaugrößen wird bei der Inbetriebnahme einer passiv geschalteten MSMC im laufenden System zuerst eine Kompatibilitätsprüfung der beiden MSMC durchgeführt, damit ein fehlerfreier Abgleich überhaupt stattfinden kann. Nach erfolgreich abgeschlossener Kompatibilitätsprüfung geht die passiv geschaltete MSMC in den Zustand "adjustment passive part" (vgl. Fig. 8 rechtes Kommunikationsmodul). In diesem Zustand werden von der passiv geschalteten MSMC bereits alle von der GCU her eintreffenden vermittlungstechnischen Meldungen bearbeitet. Die passiv geschaltete MSMC fordert die aktive MSMC mit einer "adjustment start"-Meldung auf, den Abgleich zu starten. Dann bearbeitet sie die von der aktiven MSMC eintreffenden "adjustment data"-Meldungen. Da gleichzeitig auch bereits vermittlungstechnische Meldungen eintreffen, über die neue Verbindungen eingestellt werden, führt die passiv geschaltete MSMC eine eintreffende "adjustment data"-Meldung nur aus, wenn zu dem entsprechenden Zeitschlitz noch kein "Belegtzustand" in der dazugehörnden Verwaltungsspeicherzeile eingetragen ist. Nach dem Eintreffen der "adjustment start"-Meldung geht die aktive MSMC in den Zustand "operation active and adjustment active part". Die von der GCU her neu eintreffenden vermittlungstechnischen Meldungen werden weiterhin kontinuierlich aus der "message input queue" (Warteschlange) ausgelesen und bearbeitet. In den Zwischenzeiten wird der Abgleich in der Art vorgenommen, dass die Verwaltungsspeicherzellen der aktiven MSMC durchsucht werden und pro gefundenem "Belegtzustand" eines Zeitschlitzes eine "adjustment data"-Meldung an die passiv geschaltete MSMC geschickt wird. Etwa alle 50 ms wird die Abgleichbearbeitung aufgerufen, Zuerst wird überprüft, ob die "message input queue" leer ist. Stehen noch Meldungen in der "message input queue", so werden diese zuerst bearbeitet. Erst wenn die "message input queue" leer ist, wird der Abgleichvorgang bearbeitet. Dazu wird in der gerade aktuellen Verwaltungszeile überprüft, ob ein "Belegtzustand"-Eintrag vorhanden ist und wenn ja, eine "adjustment data"-Meldung erzeugt, in welcher der passiv geschalteten MSMC die Werte zu dieser Belegung mitgeteilt werden. Die "adjustment data"-Meldung wird nicht, wie beim Senden von Meldungen sonst üblich, ans Ende der "message output queue" gestellt, sondern direkt der Schnittstelle CBI übergeben. Mit der in der aktiven MSMC gewählten Vorgehensweise (Ziffernbezeichnung wie in Fig. 8): 1) warten bis "message input queue " leer, dann 2) kurze Abgleichbearbeitung, dann 3) Abgleichmeldung "adjustment data" direkt zur Schnittstelle CBI unter Umgehung der "message output queue" werden Abgleichfehler minimiert, die in der passiv geschalteten MSMC entstehen können. Gemeint sind Abgleichfehler, die auftreten, wenn während der Zeit, in der in der aktiven MSMC gerade eine Abgleichmeldung zusammengestellt wird, eine vermittlungstechnische Meldung zu derselben Verbindung von der GCU eintrifft (vgl. Fig. 8).

Der zuvor beschriebene Abgleich wird auch bei den Steuereinrichtungen IMSC der Teilmodule IMS1 .... IMS4 der übergeordneten Kommunikationsmodule IMTU1 und IMTU2 in gleicher Weise durchgeführt.

## Patentansprüche

1. Vermittlungseinrichtung bestehend aus mehreren gleichartigen Kommunikationsmodulen (KM1, KM2, ... KMn), die zum gegenseitigen Meldungstausch an einen Bus (BU) sowie mindestens an ein übergeordnetes Kommunikationsmodul (IMTU1) angeschlossen sind, wobei sowohl die Kommunikationsmodule (KM1, KM2, ... KMn) als auch das mindestens eine übergeordnete Kommunikationsmodul (IMTU2) jeweils folgende Funktionseinheiten aufweisen:
- eine Taktaufbereitung (MCG, IMCG),
- eine Schaltmatrix (MSM, IMSM),
- eine Steuereinrichtung (MSMC, IMSMC) für die Schaltmatrix,
- eine Modul-Steuerung (MMG, IMMG),
- Schnittstellen (CBI, IMLA, IMLAI) zum Bus (BU) bzw. für modulübergreifende Verbindungen (ILWL, LWL1, LWL2, ...), wobei einem, übergeordneten Kommunikationsmodul (IMTU1) ein redundantes Partnermodul (IMTU2) zugeordnet ist, auf das die Funktionen des übergeordneten Kommunikationsmoduls (IMTU1) bei einem Ausfall oder Fehler umschaltbar sind,
**dadurch gekennzeichnet, dass**
bei einem übergeordneten Kommunikationsmodul (IMTU1, IMTU2) die Schaltmatrix (IMSM) sowie die zugehörige Steuereinrichtung (IMSC) aus mehreren gleichartig aufgebauten Teilmodulen (IMS1, ... IMS4) aufgebaut ist, die über einen kommunikationsmodulinternen Bus (IBU) sowohl untereinander als auch mit den übrigen Baugruppen des übergeordneten Kommunikationsmoduls (IMTU1, IMTU2) verbunden sind, wobei die Teilmodule insbesondere so eingerichtet sind, dass sie unabhängig von anderen Steuereinrichtungen arbeiten können, und dass eine Mehrzahl von Schnittstellen (IMLA) für modulübergreifende Verbindungen (LWL1, LWL3, ...) vorgesehen ist, die ebenfalls an den kommunikationsinternen Bus (IBU) angeschlossen sind..

2. Vermittlungseinrichtung nach Anspruch 1, **dadurch gekennzeichnet, dass** ein Kommunikationsmodul (KM1, KM2, ... KMn) ein Kommunikationsteilmodul (MTU1) und ein redundantes Partnerteilmodul (MTU2) aufweist, auf die die Funktionen des defekten Kommunikationsmoduls umschaltbar sind.

3. Vermittlungseinrichtung nach Anspruch 1 oder 2, **dadurch gekennzeichnet, dass** eine Schnittstelle (IMLA) eines redundanten Partnerteilmoduls (MTU2) von jedem Kommunikationsmodul (KM1, KM2, ... KMn) jeweils mit einer entsprechenden Schnittstelle (IMLA) eines übergeordneten redundanten Partnermoduls (IMTU2) über eine modulübergreifende Verbindung, insbesondere eine LWL-Strecke (LWL2, LWL4), verbunden ist.

4. Vermittlungseinrichtung nach einem der Ansprüche 1 bis 3, **dadurch gekennzeichnet, dass** in jedem übergeordneten Kommunikationsmodul (IMTU1) eine separate Schnittstelle (IMLAI) vorgesehen ist über die es mit seinem zugeordneten redundanten Partnermodul (IMTU2) mittels einer modulübergreifenden Verbindung, insbesondere eine LWL- Strecke (ILWL) verbunden ist.

5. Vermittlungseinrichtung nach Anspruch 4, **dadurch gekennzeichnet, dass** die redundanten Partner(teil)module (MTU2; IMTU2) sowohl eines Kommunikationsmoduls (KM1, KM2, .. . KMn) als auch eines übergeordneten Kommunikationsmoduls (IMTU1) jeweils im Bereitschaftsparallelbetrieb zu den aktiv geschalteten Kommunikations(teil)modulen arbeiten, dass bei Auftreten eines Fehlers oder Ausfalls in einem aktiv geschalteten Kommunikationsteilmodul (MTU1) nur in dem entsprechenden Kommunikationsmodul eine Umschaltung auf das jeweilige Partnerteilmodul (MTU2) erfolgt und dass sämtliche Verbindungen von und zu diesem defekten Kommunikationsmodul insbesondere gesteuert über die Modul-Steuerungen (IMMG) der übergeordneten Kommunikationsmodule (IMTU1, IMTU2) über die modulübergreifende Verbindung (ILWL) eines übergeordneten Kommunikationsmoduls (IMTU1) mit seinem redundanten Partnermodul (IMTU2) umgeleitet bzw. ersatzweggeschaltet werden.

6. Vermittlungseinrichtung nach Anspruch 5, **dadurch gekennzeichnet, dass** bei einem Ausfall oder Fehler bei Beibehaltung des ersten Ausfalls oder Fehlers in einem weiteren Kommunikationsmodul eine Komplettumschaltung der Funktionen auf nur bisher im Bereitschaftsparallelbetrieb arbeitende Partner(teil)module (MTU2 von KM1, KM2, ... KMn; IMTU2) erfolgt, wobei die zuvor bestehende Umleitung bzw. Ersatzwegschaltung aufgelöst wird;

7. Vermittlungseinrichtung nach Anspruch 6, **dadurch gekennzeichnet, dass** bei einem weiteren Ausfall oder Fehler in einem bisher an Ausfällen nicht beteiligten Kommunikationsteilmodul (MTU1 von KM1) und Weiterbestehen der vorherigen Ausfälle oder Fehler erneut eine Umleitung bzw. Ersatzwegschaltung der Verbindungen von und zu diesem nun defekten Kommunikationsteilmodul (MTU1 von KM1) über die modulübergreifende Verbindung (ILWL) eines übergeordneten Kommunikationsmoduls (IMTU1) mit seinem redundanten Partnermodul (IMTU2) erfolgt.

8. Vermittlungseinrichtung nach einem der Ansprüche 5 bis 7, **dadurch gekennzeichnet, dass** bei den Partner(teil)modulen im Bereitschaftsparallelbetrieb Funktionen des aktiven Kommunikations(teil)moduls, z. B. die Schaltmatrix-Einstellungen, bei den entsprechenden Einrichtungen des Partnermoduls synchron eingestellt werden.

9. Vermittlungseinrichtung nach einem der Ansprüche 1 bis 8, **dadurch gekennzeichnet, dass** ein Kommunikations(teil)modul (MTU1 oder MTU2 von KM1, KM2, ... KMn; IMTU1, IMTU2) eingerichtet ist, bei Auftreten eines Fehlers oder eines Ausfalls über seine Modul-Steuerung (MMG, IMMG) eine Umschaltemeldung abzugeben, um ein passiv geschaltetes Kommunikations(teil)modul anhand einer übertragenen Umschaltemeldung, insbesondere über seine Modul-Steuerung (MMG, IMMG) aktiv zu schalten.

10. Vermittlungseinrichtung nach einem der Ansprüche 1 bis 9, **dadurch gekennzeichnet, dass** die Kommunikationsteilmodule (MTU1, MTU2 von KM1, KM2, ... KMn) Umschalteinrichtungen (TR) insbesondere in Form von steurbaren Bustreibern aufweisen, die jeweils zwischen einer Modulbaugruppe und dem Bus (BU), bzw. bei den übergeordneten Kommunikationsmodulen (IMTU1; IMTU2) zwischen den Teilmodulen (IMS1, ... IMS4) und dem internen Bus (IBU) angeordnet sind.

11. Vermittlungseinrichtung nach einem der Ansprüche 1 bis 10, **dadurch gekennzeichnet, dass** bei Auftreten eines Fehlers oder eines Ausfalls in einem Kommunikationsmodul eine Signalisierung generierbar ist, die im entsprechenden Kommunikationsmodul einer Anzeigeeinrichtung (AZ) zuführbar ist und/oder einer Zentrale (Z) insbesondere zusammen mit einer Fehlermeldung übermittelbar ist.

12. Vermittlungseinrichtung nach einem der Ansprüche 9 bis 11, **dadurch gekennzeichnet, dass** eine Fehlermeldung eine Information über den Fehlertyp enthält, anhand derer die Art einer Umschaltung dokumentiert wird.

13. Vermittlungseinrichtung nach Anspruch 12, **dadurch gekennzeichnet, dass** bei Fehlerereignissen, die eine schnelle Reaktion erfordern, z. B. einem Systemtaktausfall, eine vom passiv geschalteten Kommunikationsteilmodul (MTU2 von KM1, KM2, ... KMn) gesteuerte Hardware-Umschaltung ausführbar ist.

14. Vermittlungseinrichtung nach Anspruch 12, **dadurch gekennzeichnet, dass** bei Fehlerereignissen, die keine unmittelbare Reaktion erfordern, eine Umschaltung über einen Meldungstausch zwischen Kommunikationsmodul und Partnermodul bzw. übergeordnetem Kommunikationsmodul und umzuschaltendem Modul insbesondere zwischen deren Modul-Steuerungen (MMG, IMMG) softwaremässig ausführbar ist.

15. Vermittlungseinrichtung nach einem der Ansprüche 1 bis 14, **dadurch gekennzeichnet, dass** ein im Bereitschaftsparallelbetrieb arbeitendes Partner(teil)modul (MTU2 von KM1, KM2, ... KMn; IMTU2) auf Auftreten eines Fehlers oder Ausfalls hin überwacht wird, um gegebenenfalls eine Fehlermeldung insbesondere an eine Zentrale (Z) abzugeben.

16. Vermittlungseinrichtung nach einem der Ansprüche 1 bis 15, **dadurch gekennzeichnet, dass** die Kommunikationsmodule eingerichtet sind über einen äußeren Steuerbefehl eine Service-Umschaltung vom aktiven in den passiven Betrieb auszuführen, wobei ein solcher Steuerbefehl durch einen einem Kommunikationsmodul lokal zugeordneten Schalter oder durch ein Fernwirksignal oder über ein Systemterminal generierbar ist.

17. Vermittlungseinrichtung nach einem der Ansprüche 1 bis 16, **dadurch gekennzeichnet, dass** die Einstellung der Taktaufbereitung (MCG, IMCG) in einem Kommunikationsmodul in Zusammenarbeit einer takteinspeisenden Baugruppe mit den Modul-Steuerungen (MMG, IMMG) erfolgt, um die Taktsynchronisierung innerhalb der Vermittlungseinrichtung zu erreichen.

18. Vermittlungseinrichtung nach einem der Ansprüche 1 bis 17, **dadurch gekennzeichnet, dass** sich die Modul-Steuerungen (MMG, IMMG) gegenseitig insbesondere mittels Testmeldungen überwachen, um Modulausfälle zu erkennen und zu melden sowie gegebenenfalls Umschaltungen vorzunehmen.

19. Vermittlungseinrichtung nach einem der Ansprüche 1 bis 18, **dadurch gekennzeichnet, dass** modulübergreifende Verbindungen (ILWL, LWL1, LWL2, ...) über Hardwaresignale und Testmeldungen zu in anderen Kommunikationsmodulen befindlichen Modul-Steuerungen (MMG, IMMG) überwacht werden, und im Fehlerfall entsprechende Umschaltungen erfolgen.

20. Vermittlungseinrichtung nach einem der Ansprüche 1 bis 19, **dadurch gekennzeichnet, dass** hinzukommende Kommunikationsmodule und/oder modulübergreifende Verbindungen erst dann aktivierbar sind, wenn nach ihrer Erkennung eine Antwort auf eine Testmeldung erhalten wurde.

21. Vermittlungseinrichtung nach einem der Ansprüche 1 bis 20, **dadurch gekennzeichnet, dass** Meldungen für eine Umschaltung wiederholt werden, wenn eine modulübergreifende Reaktion ausbleibt.

22. Vermittlungseinrichtung nach einem der Ansprüche 1 bis 21, dass eine Modul-Steuerung (MMG, IMMG) eingerichtet ist Einstellanweisungen für alle anderen Modul-Steuerungen (MMG, IMMG) auszuführen und dass diese Modul-Steuerung für eine zentrale Fehleranzeige zuständig ist.

23. Vermittlungseinrichtung nach einem der Ansprüche 1 bis 22, **dadurch gekennzeichnet, dass** für einen Bereitschaftsparallelbetrieb von Kommunikations(teil)modul und zugehörigem Partner(teil)modul die Steuereinrichtungen (MSMC, IMSMC) der Schaltmatrizen (MSM, IMSC) während der Inbetriebnahme der passiven Kommunikations(teil)module durch Meldungstausch der jeweiligen Einstellungen abgeglichen werden.

## Claims

1. Switching device consisting of a plurality of communication modules (KM1, KM2, ... KMn) of uniform type which are linked for mutual message exchange to a bus (BU) and to at least one parent communication module (IMTU1), both the communication modules (KM1, KM2, ... KMn) and the at least one parent communication module (IMTU2) each have the following functional units:
- a clock processor (MCG, IMCG),
- a switching matrix (MSM, IMSM),
- a control device (MSMC, IMSMC) for the switching matrix,
- a module controller (MMG, IMMG),
- interfaces (CBI, IMLA, IMLAI) to the bus (BU) or for cross-module connections (ILWL, LWL1, LWL2, ...), a redundant partner module (IMTU2) being assigned to one parent communication module (IMTU1), to which partner module the functions of the parent communication module (IMTU1) can be switched over in the event of a failure or fault, **characterised in that** both the switching matrix (IMSM) and the associated control device (IMSC) in a parent communication module (IMTU1, IMTU2) are constructed from a plurality of uniformly constructed sub-modules (IMS1, ... IMS4) which are both interconnected and connected to the other assemblies of the parent communication module (IMTU1, IMTU2) by a bus (IBU) inside the communication module, the sub-modules being configured in particular so as to be able to operate independently of other control devices, and **in that** a plurality of interfaces (IMLA) are provided for cross-module connections (LWL1, LWL3, ...) and are also linked to the bus (IBU) inside the communication module.

2. Switching device according to claim 1, **characterised in that** a communication module (KM1, KM2, ... KMn) has a communication sub-module (MTU1) and a redundant partner sub-module (MTU2) to which the functions of the defective communication module can be switched over.

3. Switching device according to either claim 1 or claim 2, **characterised in that** each interface (IMLA) of a redundant partner sub-module (MTU2) of each communication module (KM1, KM2, ... KMn) is connected to a corresponding interface (IMLA) of a parent redundant partner module (IMTU2) by means of a cross-module connection, in particular a fibre optic path (LWL2, LWL4).

4. Switching device according to any of claims 1 to 3, **characterised in that** a separate interface (IMLAI) is provided in each parent communication module (IMTU1) and connects said parent communication module to its assigned redundant partner module (IMTU2) by means of a cross-module connection, in particular a fibre optic path (ILWL).

5. Switching device according to claim 4, **characterised in that** each redundant partner (sub-)module (MTU2; IMTU2) of either a communication module (KM1, KM2, ... KMn) or a parent communication module (IMTU1) operates in standby parallel operation with respect to the activated communication (sub-)modules such that if a fault or failure occurs in an activated communication sub-module (MTU1) a switchover to the relevant partner sub-module (MTU2) takes place only in the corresponding communication module, and **in that** all connections from and to this defective communication module controlled in particular by the module controllers (IMMG) of the parent communication modules (IMTU1, IMTU2) are diverted or route-switched via the cross-module connection (ILWL) of a parent communication module (IMTU1) with its redundant partner module (IMTU2).

6. Switching device according to claim 5, **characterised in that**, in the event of a failure or fault in a further communication module while the first failure or fault is still persisting, functions are fully switched over to partner (sub-)modules (MTU2 of KM1, KM2, ... KMn; IMTU2) having as yet operated only in standby parallel operation, the previous diversion or route-switch being terminated.

7. Switching device according to claim 6, **characterised in that**, in the event of a further failure or fault in a communication sub-module (MTU1 of KM1) not yet involved in failures and previous failures or faults continuing, another diversion or route-switch of the connections from and to this now defective communication sub-module (MTU1 of KM1) takes place via the cross-module connection (ILWL) of a parent communication module (IMTU1) with its redundant partner module (IMTU2).

8. Switching device according to any of claims 5 to 7, **characterised in that**, when the partner (sub-)modules are in standby parallel operation, functions of the active communication (sub-)module, for example the switching matrix settings, are set up synchronously in the corresponding devices of the partner module.

9. Switching device according any of claims 1 to 8, **characterised in that** a communication (sub-)module (MTU1 or MTU2 of KM1, KM2, ... KMn; IMTU1, IMTU2) is configured to output a switchover message by means of its module controller (MMG, IMMG) if a fault or a failure occurs, in order to activate a deactivated communication (sub-)module on the basis of a transmitted switchover message, in particular by means of its module controller (MMG, IMMG).

10. Switching device according to any of claims 1 to 9, **characterised in that** the communication sub-modules (MTU1, MTU2 of KM1, KM2, ... KMn) have switchover devices (TR), in particular in the form of controllable bus drivers, which are each arranged between a module assembly and the bus (BU) or, in the case of the parent communication modules (IMTU1; IMTU2), between the sub-modules (IMS1, ... IMS4) and the internal bus (IBU).

11. Switching device according to any of claims 1 to 10, **characterised in that** a signalling can be generated if a fault or a failure occurs in a communication module, can be fed in the corresponding communication module to a display device (AZ) and/or can be transmitted to a master station (Z), in particular together with a fault message.

12. Switching device according to any of claims 9 to 11, **characterised in that** a fault message contains information on the type of fault, on the basis of which information the type of switchover is recorded.

13. Switching device according to claim 12, **characterised in that**, in the event of fault incidences necessitating a rapid response, for example in the event of a system clock failure, a hardware-switchover controlled by the deactivated communication sub-module (MTU2 of KM1, KM2, ... KMn) can be executed.

14. Switching device according to claim 12, **characterised in that**, in the event of fault incidences not necessitating an immediate response, a switchover can be executed using software by means of a message exchange between the communication module and the partner module or between the parent communication module and the module intended for switchover, in particular between their module controllers (MMG, IMMG).

15. Switching device according to any of claims 1 to 14, **characterised in that** a partner (sub-)module (MTU2 of KM1, KM2, ... KMn; IMTU2) operating in standby parallel operation is monitored on occurrence of a fault or failure, in order to output a fault message, in particular to a master station (Z), where appropriate.

16. Switching device according to any of claims 1 to 15, **characterised in that** the communication modules are configured to execute a service switchover from active to passive operation by means of an external control command, it being possible to generate such a control command using a switch locally assigned to a communication module or using a telecontrol signal or by means of a system terminal.

17. Switching device according to any of claims 1 to 16, **characterised in that** the set-up of the clock processor (MCG, IMCG) takes place in a communication module with the cooperation of a clock pulse assembly with the module controllers (MMG, IMMG), in order to achieve clock synchronisation within the switching device.

18. Switching device according to any of claims 1 to 17, **characterised in that** the module controllers (MMG, IMMG) monitor one another, in particular by means of test messages, to identify and provide notification of module failures and to perform switchovers where appropriate.

19. Switching device according to any of claims 1 to 18, **characterised in that** cross-module connections (ILWL, LWL1, LWL2, ...) are monitored by means of hardware signals and test messages to module controllers (MMG, IMMG) located in other communication modules, and corresponding switchovers take place in the event of a fault.

20. Switching device according to any of claims 1 to 19, **characterised in that** additional communication modules and/or cross-module connections can only be activated once they have identified that a response to a test message has been received.

21. Switching device according to any of claims 1 to 20, **characterised in that** messages for a switchover are repeated in the absence of a cross-module reaction.

22. Switching device according to any of claims 1 to 21, **characterised in that** one module controller (MMG, IMMG) is configured to execute set-up instructions for all other module controllers (MMG, IMMG), and **in that** this module controller is responsible for a central fault display.

23. Switching device according to any of claims 1 to 22, **characterised in that**, for standby parallel operation of the communication (sub-)module and the associated partner (sub-)module, the control devices (MSMC, IMSMC) of the switching matrices (MSM, IMSC) are adjusted during start-up of the passive communication (sub-)modules by means of message exchange of the relevant settings.

## Revendications

1. Dispositif de commutation, composé de plusieurs modules de communication (KM1, KM2, ..., KMn) similaires qui sont connectés, pour l'échange réciproque de messages, à un bus (BU) ainsi qu'au moins à un module de communication (IMTU1) supérieur, les modules de communication (KM1, KM2, ..., KMn) ainsi que le module de communication (IMTU2) supérieur au moins au nombre de un présentant respectivement les unités fonctionnelles suivantes :
- un dispositif de conditionnement d'horloge (MCG, IMCG),
- une matrice de commutation (MSM, IMSM),
- un dispositif de commande (MSMC, IMSMC) pour la matrice de commutation,
- une commande de modules (MMG, IMMG),
- des interfaces (CBI, IMLA, IMLAI) avec le bus (BU) ou respectivement pour des connexions (ILWL, LWL1, LWL2, ...) impliquant plusieurs modules, un module partenaire (IMTU2) redondant étant affecté à un module de communication (IMTU1) supérieur, module partenaire vers lequel les fonctions du module de communication (IMTU1) supérieur peuvent être commutées en cas de panne ou d'erreur,
**caractérisé en ce que**,
dans le cas d'un module de communication (IMTU1, IMTU2) supérieur, la matrice de commutation (IMSM) ainsi que le dispositif de commande (IMSC) qui lui correspond sont composés de plusieurs modules partiels (IMS1, ..., IMS4) de constitution similaire qui sont connectés aussi bien entre eux qu'avec les autres ensembles du module de communication (IMTU1, IMTU2) supérieur par le biais d'un bus (IBU) interne au module de communication, les modules partiels étant en particulier aménagés de telle sorte qu'ils peuvent travailler indépendamment d'autres dispositifs de commande, et **en ce qu'**une pluralité d'interfaces (IMLA) sont prévues pour des connexions (LWL1, LWL3, ...) impliquant plusieurs modules qui sont également connectées au bus (IBU) interne au module de communication.

2. Dispositif de commutation selon la revendication 1, **caractérisé en ce qu'**un module de communication (KM1, KM2, ..., KMn) présente un module partiel de communication (MTU1) et un module partiel partenaire (MTU2) redondant vers lesquels les fonctions du module de communication défectueux peuvent être commutées.

3. Dispositif de commutation selon la revendication 1 ou 2, **caractérisé en ce qu'**une interface (IMLA) d'un module partiel partenaire (MTU2) redondant de chaque module de communication (KM1, KM2, ..., KMn) est connectée respectivement à une interface (IMLA) correspondante d'un module partenaire (IMTU2) redondant supérieur par le biais d'une connexion impliquant plusieurs modules, en particulier d'un circuit LWL (LWL2, LWL4).

4. Dispositif de commutation selon une des revendications 1 à 3, **caractérisé en ce que**, dans chaque module de communication (IMTU1) supérieur, il est prévu une interface (IMLA1) séparée par le biais de laquelle il est connecté à son module partenaire (IMTU2) redondant supérieur affecté au moyen d'une connexion impliquant plusieurs modules, en particulier d'un circuit LWL (ILWL).

5. Dispositif de commutation selon la revendication 4, **caractérisé en ce que** les modules (partiels) partenaires (MTU2 ; IMTU2) redondants aussi bien d'un module de communication (KM1, KM2, ..., KMn) que d'un module de communication (IMTU1) supérieur travaillent respectivement dans le mode parallèle de veille par rapport aux modules (partiels) de communication activés, **en ce que**, lors de la survenue d'une erreur ou d'une panne dans un module partiel de communication (MTU1) activé, il n'intervient une commutation vers le module partiel partenaire (MTU2) respectif que dans le module de communication correspondant, et **en ce que** toutes les connexions en provenance et en direction du module de communication défectueux sont détournées ou respectivement commutées vers des voies de remplacement en étant en particulier commandées par le biais des commandes de modules (IMMG) des modules de communication (IMTU1, IMTU2) supérieurs par le biais de la connexion (ILWL) impliquant plusieurs modules d'un module de communication (IMTU1) supérieur avec son module partenaire (IMTU2) redondant.

6. Dispositif de commutation selon la revendication 5, **caractérisé en ce que**, lors d'une panne ou d'une erreur, en cas de maintien de la première panne ou erreur dans un autre module de communication, il intervient une commutation complète des fonctions seulement vers des modules (partiels) partenaires (MTU2 de KM1, KM2, ..., KMn ; IMTU2) qui fonctionnaient dans le mode parallèle de veille jusqu'à présent, le détournement ou respectivement la commutation vers des voies de remplacement préexistant ou préexistante étant supprimé(e).

7. Dispositif de commutation selon la revendication 6, **caractérisé en ce que**, en cas d'autre panne ou erreur dans un module partiel de communication (MTU1 de KM1) non impliqué jusqu'à présent dans des pannes et en cas de persistance des pannes ou erreurs antérieures, il se produit de nouveau un détournement ou une commutation, vers des voies de remplacement, des connexions en provenance et en direction de ce module partiel de communication (MTU1 de KM1) désormais défectueux par le biais de la connexion (ILWL) impliquant plusieurs modules d'un module de communication (IMTU1) supérieur avec son module partenaire (IMTU2) redondant.

8. Dispositif de commutation selon une des revendications 5 à 7, **caractérisé en ce que**, pour les modules (partiels) partenaires dans le mode parallèle de veille, des fonctions du module (partiel) de communication actif, par exemple les réglages de la matrice de commutation, sont réglées de façon synchrone pour les dispositifs correspondants du module partenaire.

9. Dispositif de commutation selon une des revendications 1 à 8, **caractérisé en ce qu'**un module (partiel) de communication (MTU1 ou MTU2 de KM1, KM2, ..., KMn ; IMTU1, IMTU2) est aménagé pour, lors de la survenue d'une erreur ou d'une panne, délivrer par le biais de sa commande de modules (MMG, IMMG) un message de commutation pour activer un module (partiel) de communication non activé à l'aide d'un message de commutation transmis, en particulier par le biais de sa commande de modules (MMG, IMMG).

10. Dispositif de commutation selon une des revendications 1 à 9, **caractérisé en ce que** les modules de communication (MTU1, MTU2 de KM1, KM2, ..., KMn) présentent des dispositifs de commutation (TR), en particulier sous forme de circuits d'attaque de bus pouvant être commandés, qui sont disposés respectivement entre un ensemble de modules et le bus (BU), ou respectivement, dans le cas des modules de communication (IMTU1 ; IMTU2) supérieurs, entre les modules partiels (IMS1, ..., IMS4) et le bus interne (IBU).

11. Dispositif de commutation selon une des revendications 1 à 10, **caractérisé en ce que**, en cas de survenue d'une erreur ou d'une panne dans un module de communication, une signalisation peut être générée qui, dans le module de communication correspondant, peut être conduite à un dispositif d'affichage (AZ) et/ou qui peut être transmise à une centrale (Z), en particulier en même temps qu'un message d'erreur.

12. Dispositif de commutation selon une des revendications 9 à 11, **caractérisé en ce qu'**un message d'erreur contient une information sur le type d'erreur, à l'aide de laquelle le type d'une commutation est documenté.

13. Dispositif de commutation selon la revendication 12, **caractérisé en ce que**, en cas de survenues d'erreur qui exigent une réaction rapide, par exemple une perte de synchronisation du système, une commutation matérielle commandée par le module partiel de communication (MTU2 de KM1, KM2, ..., KMn) non activé peut être effectuée.

14. Dispositif de commutation selon la revendication 12, **caractérisé en ce que**, en cas de survenues d'erreur qui n'exigent pas de réaction immédiate, une commutation via un échange de messages entre le module de communication et le module partenaire ou respectivement entre le module de communication supérieur et le module à commuter, en particulier entre leurs commandes de modules (MMG, IMMG), peut être effectuée par voie logicielle.

15. Dispositif de commutation selon une des revendications 1 à 14, **caractérisé en ce qu'**un module (partiel) partenaire (MTU2 de KM1, KM2, ..., KMn ; IMTU2) travaillant dans l'état parallèle en veille fait l'objet d'une surveillance de survenue d'erreur ou de panne afin de délivrer éventuellement un message d'erreur en particulier à une centrale (Z).

16. Dispositif de commutation selon une des revendications 1 à 15, **caractérisé en ce que** les modules de communication sont aménagés pour effectuer, par le biais d'une instruction de commande extérieure, une commutation de service depuis le mode actif vers le mode passif, une telle instruction de commande pouvant être générée par un commutateur affecté localement à un module de communication ou par un signal de télécommande ou par le biais d'un terminal du système.

17. Dispositif de commutation selon une des revendications 1 à 16, **caractérisé en ce que** le réglage du dispositif de conditionnement d'horloge (MCG, IMCG) s'effectue dans un module de communication, avec coopération d'un ensemble d'alimentation d'horloge avec les commandes de modules (MMG, IMMG) afin d'atteindre la synchronisation d'horloge à l'intérieur du dispositif de commutation.

18. Dispositif de commutation selon une des revendications 1 à 17, **caractérisé en ce que** les commandes de modules (MMG, IMMG) se surveillent mutuellement, en particulier au moyen de messages-tests, afin de détecter et de signaler des pannes de modules ainsi que d'entreprendre éventuellement des commutations.

19. Dispositif de commutation selon une des revendications 1 à 18, **caractérisé en ce que** des connexions (ILWL, LWL1, LWL2, ...) impliquant plusieurs modules sont surveillées par le biais de signaux matériels et de messages-tests vers des commandes de modules (MMG, IMMG) situées dans d'autres modules de communication, et des commutations correspondantes sont effectuées en cas d'erreur.

20. Dispositif de commutation selon une des revendications 1 à 19, **caractérisé en ce que** des nouveaux modules de communication et/ou des nouvelles connexions impliquant plusieurs modules ne sont activables que si une réponse à un message-test a été obtenue après leur détection.

21. Dispositif de commutation selon une des revendications 1 à 20, **caractérisé en ce que** des messages pour une commutation sont répétés en cas d'absence de réaction impliquant plusieurs modules.

22. Dispositif de commutation selon une des revendications 1 à 21, **caractérisé en ce qu'**une commande de modules (MMG, IMMG) est aménagée pour effectuer des ordres de réglage pour toutes les autres commandes de modules (MMG, IMMG), et **en ce que** cette commande de modules est compétente pour un affichage d'erreur central.

23. Dispositif de commutation selon une des revendications 1 à 22, **caractérisé en ce que**, pour un mode parallèle de veille du module (partiel) de communication et du module (partiel) partenaire correspondant, les dispositifs de commande (MSMC, IMSMC) des matrices de commutation (MSM, IMSC) sont ajustés pendant la mise en marche des modules (partiels) de communication passifs par échange de messages des réglages respectifs.
